# EUROPEAN PATENT APPLICATION

(11) **EP 1 717 703 A1**
(43) Date of publication of application: **02.11.2006**
(21) Application number: 05709885.7
(22) Date of filing: 08.02.2005
(51) Int. Cl.: G06F 11/20, G06F 9/50, H04Q 9/00

(54) **ELECTRONIC DEVICE FOR AUTOMATICALLY CONTINUING TO PROVIDE SERVICE**

(30) Priority: 09.02.2004 JP 2004031761
(71) Applicant: Matsushita Electric Industries Co., Ltd., Kadoma-shi, Osaka 571-8501 (JP)
(72) Inventor: KANAMARU, Tomokazu c/o Matsushita El.Ind.Co.,Ltd., Chuo-ku, Osaka-shi, Osaka 540-6319 (JP); OASHI, Masahiro c/o Matsushita El.Ind.Co.,Ltd., Chuo-ku, Osaka-shi, Osaka 540-6319 (JP)
(74) Representative: Gassner, Wolfgang
(86) International application number: PCT/JP2005/001833
(87) International publication number: WO 2005/076134

(57) **Abstract**

An object to the present invention is to provide an electronic device capable of continuing to provide a service. The electronic device of the present invention comprises an application recognizing section for recognizing an application held by the other electronic device, an application unexecutability detecting section for detecting whether or not the application recognized by the application recognizing section is unexecutable in the other electronic device, an application execution determining section for determining whether or not a substitute application which can substitute for an application which the application unexecutability detecting section has determined that is unexecutable, is to be executed, a substitute application holding determining section for determining whether or not the substitute application which can substitute for the application determined to be unexecutable is held in the electronic device, and an application executing section for executing the substitute application.

## Description

### TECHNICAL FIELD

The present invention relates to an electronic device connected to a network, and more particularly, to an electronic device which provides a service by executing a software program (application).

### BACKGROUND ART

As techniques for application executing systems which operate applications on electronic devices, such as home appliances and the like, which are connected to a network, there are JAVA(R) (Sun Microsystems(R)), NET(DotNet) (Microsoft(R)), and the like.

These techniques have a virtual machine mechanism which enables the same application to be operated on any hardware (CPUs of network home appliances, etc.), and therefore, are expected to serve as a common platform for providing services.

Also, as techniques for automatically setting an environment for execution of an application via a network, there are UPnP (Universal Plug and Play) proposed by Microsoft(R), Jini(TM) proposed by Sun Microsystems(R), and the like.

These techniques are characterized in that only by connecting a device to a network, the device immediately gets ready to use a network function without the user having to perform a complicated setting work, i.e., such convenience is provided to the user, for example.

As an example of a system in which a device which a user uses searches for a device which has a function corresponding to a user's request via a network, a technique has been proposed in Patent Document 1.

As an example of a system in which a server device performs restoration when a failure occurs in a service, a technique has been proposed in Patent Document 2.

As an example of a method for searching for a substitute device and uses the device when a service cannot be used in a terminal which a user wants to use, a technique has been proposed in Patent Document 3.
Patent Document 1: Japanese Patent Laid-Open Publication No. 2003-178036
Patent Document 2: Japanese Patent Laid-Open Publication No. 2002-24039
Patent Document 3: Japanese Patent Laid-Open Publication No. 2002-94912

### DISCLOSURE OF THE INVENTION

### PROBLEMS TO BE SOLVED BY THE INVENTION

Home appliance devices often fall into a state in which an application cannot be executed.

Representatively, such a state occurs when energization cannot be accomplished (e.g., a device is powered off, a buttery is dead in a mobile device or the like, etc.). Also, when another application having high priority is performed, the other application may no longer be executed on the same device mainly due to shortage of a resource.

Assuming that a home appliance device falls into such a state, even when a new service is tried to be performed in the home appliance device, the application cannot be started up, so that the service cannot be provided. Also, even if an application is being executed, the execution has to be interrupted to stop providing the service.

Therefore, a technique should be invented for trying to restore a service or providing a substitute performing means for the service, with respect a device which falls into a state in which the service cannot be performed, by utilizing a characteristic that the home appliance device is connected to a network.

Patent Document 1 proposes a system in which a change in a user's environment or a user's request in a home appliance network system is taken into consideration. However, Patent Document 1 does not mention a specific processing method when a device falls into a state in which a service cannot be performed as described above. Therefore, when the reliability of performance of a service is desired to be improved, implementation of an additional specific processing means is required.

Patent Document 2 describes a system in which, when a device falls into a state in which a service cannot be performed, a center server addresses a failure and performs a restoration process. In this case, however, the presence of the center server is assumed. Therefore, the system of Patent Document 2 cannot support a network in which a center server is not assumed to be present (e.g., only a peer-to-peer network structure of home appliance devices is assumed).

Patent Document 3 describes a method for searching for a substitute device and performing reservation of use when a failure occurs in a device for which reservation of use has been performed, so that the device falls into a state in which a service cannot be performed. In this method, however, it is necessary to previously register substitute actions, depending on combinations of devices. Also, Patent Document 3 does not mention what measures are taken to continue a service when a device falls into a state in which it is not possible to continue the service when the service is being performed.

No ef fective means has been considered to date, regarding a technique for securing the stability of a service with a minimum effort of a user even on a network composed only of devices without the assumption of a centralized control of a center server, particularly a restoration means when a device falls into a state in which a service cannot be continued when the service is being executed.

Therefore, an object of the present invention is to provide an electronic device which can continue to perform a service even on a network composed only of devices. Another object of the present invention is to provide a program and a method which are executed in the electronic device, and a recording medium on which the program is recorded.

### SOLUTION TO THE PROBLEMS

To achieve the above objects, the present invention has the following features. The present invention provides an electronic device connected via a network to at least another electronic device which can execute an application, comprising an application recognizing section for recognizing an application held by the other electronic device, an application unexecutability detecting section for detecting whether or not the application recognized by the application recognizing section is unexecutable in the other electronic device, an application execution determining section for determining whether or not a substitute application which can substitute for an application which the application unexecutability detecting section has determined that is unexecutable, is to be executed, a substitute application holding determining section for determining whether or not the substitute application which can substitute for the application determined to be unexecutable is held in the electronic device, and an application executing section for executing the substitute application.

Preferably, the application execution determining section may include an application startup request detecting section for detecting a startup request with respect to the application which the application unexecutability detecting section has detected that is unexecutable, and the application execution determining section, when a startup request is detected with respect to the application which the application unexecutability detecting section has determined that is unexecutable, may determine that the substitute application is to be executed.

Preferably, the substitute application holding determining section may include an application identity determining section for determining whether or not an identical function application having a function identical to the application held by the other electronic device recognized by the application recognizing section is held by the electronic device, and creating an identity table in which the application held by the other electronic device is associated with the identical function application held in the electronic device, the identical function application may be a substitute application, and the substitute application holding determining section may determine whether or not the substitute application is held in the electronic device, based on the identity table created by the application identity determining section.

Preferably, the substitute application holding determining section may include a relevant application determining section for creating a relevance table in which a relevant function application having a function relevant to the application held by the other electronic device recognized by the application recognizing section, is associated with the application held by the other electronic device, the relevant function application may be a substitute application, and the substitute application holding determining section may determine whether or not the substitute application is held in the electronic device, based on the relevance table created by the relevant application determining section.

Preferably, the application execution determining section may include an application executed state obtaining section for obtaining an executed state of an application executed in the other electronic device as application executed state information, the application execution determining section may determine that the substitute application is to be executed, when the application executed state information about the application which the application startup request detecting section has determined that is unexecutable, is held by the application executed state obtaining section, and the application executing section may execute the substitute application based on the application executed state information so as to continue the application determined to be unexecutable.

Preferably, The application execution determining section may include an inter-device startup arbitrating section which inquires the other electronic device connected to the network whether or not the substitute application is held, and communicates with another electronic device which holds the substitute application, to determine whether or not the substitute application is to be executed in the electronic device.

Also, the present invention provides a method for processing an electronic device connected via a network to at least another electronic device which can execute an application, comprising the steps of recognizing an application held by the other electronic device, detecting whether or not the application recognized by the application recognizing section is unexecutable in the other electronic device, determining whether or not a substitute application which can substitute for an application determined to be unexecutable, is to be executed, determining whether or not the substitute application which can substitute for the application determined to be unexecutable is held in the electronic device, and executing the substitute application.

Also, the present invention provides a program executed in an electronic device connected via a network to at least another electronic device which can execute an application, comprising the steps of recognizing an application held by the other electronic device, detecting whether or not the application recognized by the application recognizing section is unexecutable in the other electronic device, determining whether or not a substitute application which can substitute for an application determined to be unexecutable, is to be executed, determining whether or not the substitute application which can substitute for the application determined to be unexecutable is held in the electronic device, and executing the substitute application.

### EFFECT OF THE INVENTION

According to the present invention, even if an application included in an electronic device on a network falls into an unexecutable state, so that a service can no longer be performed, a substitute application is executed to automatically continue the service. Therefore, the service is stably provided on the network.

If there is an application having a function identical to an unexecutable application, a service equivalent to an unexecutable service is provided.

If there is an application having a function relevant to an unexecutable application, a service similar to an unexecutable service or a service assisting the unexecutable service is executed, resulting in an improvement in convenience and flexibility of the service.

The electronic device can recognize whether or not an application is unexecutable, only by detecting a startup request with respect to the application. Therefore, it is easy to detect an unexecutable state of the application.

Also, the electronic device can execute a substitute application while continuing astate of an unexecutable application partway through execution, resulting in an improvement in continuity of the service.

When a plurality of electronic devices on a network holds substitute applications, arbitration is performed between the devices so that an appropriate electronic device executes a substitute application, whereby a resource on the network is effectively utilized.

As described above, according to the present invention, even in electronic devices on a network not in the assumption of a centralized control scheme like a center server, a high level of stability of a service can be secured.

These and other objects, features, aspects and advantages of the present invention will become more apparent from the following detailed description of the present invention when taken in conjunction with the accompanying drawings.

### BRIEF DESCRIPTION OF THE DRAWINGS

[FIG. 1] FIG. 1 is a diagram illustrating a configuration of a whole system comprising electronic devices according to a first embodiment of the present invention.
[FIG. 2] FIG. 2 is a diagram illustrating a hardware configuration of electronic devices 1 to 5 of the first embodiment of the present invention.
[FIG. 3] FIG. 3 is a diagram illustrating an implementation example of application attribute information in the form of a table.
[FIG. 4] FIG. 4 is a block diagram illustrating a functional configuration of an electronic device when an application continuation program is executed.
[FIG. 5] FIG. 5 is a flowchart illustrating a rough outline of an operation of the electronic device 1 when the application continuation program is executed.
[FIG. 6] FIG. 6 is a flowchart illustrating an operation of an application identity determining section 151.
[FIG. 7] FIG. 7 is a diagram illustrating an exemplary identity table.
[FIG. 8] FIG. 8 is a diagram for explaining a procedure when a user registers a relevance table.
[FIG. 9] FIG. 9 is a diagram illustrating an exemplary relevance table.
[FIG. 10] FIG. 10 is a flowchart illustrating an exemplary operation of an application unexecutability detecting section 13.
[FIG. 11] FIG. 11 is a flowchart illustrating an operation of the electronic device 1 when a first basic process is executed.
[FIG. 12] FIG. 12 is a flowchart illustrating an operation of the electronic device 1 when a second basic process is executed.
[FIG. 13] FIG. 13 is a flowchart illustrating an operation of the electronic device 1 when a third basic process is executed.
[FIG. 14] FIG. 14 is a flowchart illustrating an operation of the electronic device 1 when a fourth basic process is executed.
[FIG. 15] FIG. 15 is a block diagram illustrating a functional configuration of the electronic devices land 3 when an application continuation program according to a second embodiment is executed.
[FIG. 16] FIG. 16 is a flowchart illustrating an operation of the electronic device 1 when a process X is added to the first basic process.
[FIG. 17] FIG. 17 is a flowchart illustrating an operation of the electronic device 1 when the process X is added to the second basic process.
[FIG. 18] FIG. 18 is a flowchart illustrating an operation of the electronic device 1 when the process X is added to the third basic process.
[FIG. 19] FIG. 19 is a flowchart illustrating an operation of the electronic device 1 when the process X is added to the fourth basic process.
[FIG. 20] FIG. 20 is a flowchart illustrating a detailed operation of the electronic device 1 in a substitute application startup deciding process (steps S701, S801, S901, S1001).
[FIG. 21] FIG. 21 is a sequence diagram illustrating communication between electronic devices on a network in the substitute application startup deciding process (step S701, S801, S901 and S1001).
[FIG. 22] FIG. 22 is a diagram illustrating an exemplary table form of startup arbitration information.

### DESCRIPTION OF THE REFERENCE CHARACTERS

- 1-5: electronic device
- 6: network
- 100: central processing unit
- 101: main storage unit
- 102: auxiliary storage unit
- 103: communication unit
- 104: input unit
- 105: output unit
- 11: timing control section
- 12: application recognizing section
- 13: application unexecutability detecting section
- 14: application execution determining section
- 141: application startup request detecting section
- 142: application executed state obtaining section
- 15: substitute application holding determining section
- 151: application identity determining section
- 152: relevant application determining section
- 16: application executing section
- 7a, 7b, 7c, 7d: user interface
- 20: inter-device startup arbitrating section

### BEST MODE FOR CARRYING OUT THE INVENTION

Hereinafter, embodiments of the present invention will be described with reference to the accompanying drawings.
(First embodiment)

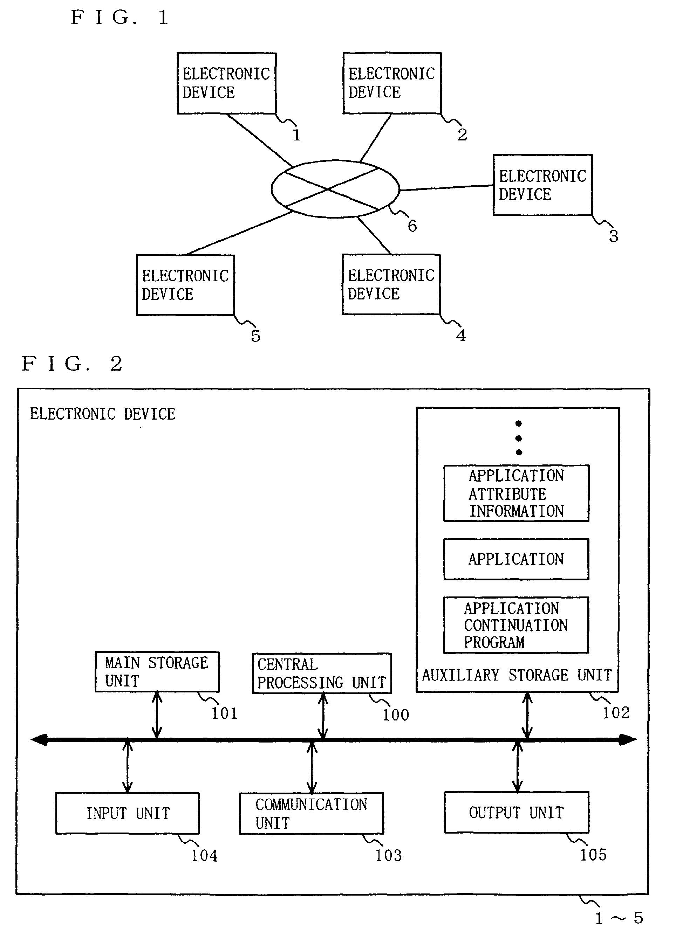

FIG. 1 is a diagram illustrating a configuration of a whole system comprising electronic devices according to a first embodiment of the present invention. In FIG. 1, electronic devices 1 to 5 are connected to each other via a network 6 so that the electronic devices 1 to 5 can communicate with each other.

The electronic device of the present invention is applicable in an environment in which at least two electronic devices are connected via a network. Therefore, although the number of electronic devices is assumed to be five in FIG. 1, the number of electronic devices may be two or more or four or less, or may be six or more.

The network 6 may have any communication standard as long as data communication can be performed between electronic devices connected to each other. Also, the network 6 may be a public network (e.g., the Internet), a network enclosed in a limited domain (e.g., LAN), or a combination thereof.

FIG. 2 is a diagram illustrating a hardware configuration of the electronic devices 1 to 5 of the first embodiment of the present invention. Hereinafter, as a representative example, the electronic device 1 will be described. In FIG. 2, the electronic device 1 comprises a central processing unit 100, a main storage unit 101, an auxiliary storage unit 102, a communication unit 103, an input unit 104, and an output unit 105. Note that, if the electronic device 1 is a general-purpose device, such as a personal computer, each block of FIG. 2 is often implemented as a separate integrated circuit or device. However, if the electronic device 1 is a dedicated device, such as a mobile telephone, a network home appliance, or the like, each block of FIG. 2 may be formed on a dedicated integrated circuit.

The central processing unit 100 controls an operation of the electronic device 1. The central processing unit 100 may have a function for controlling the operation of the electronic device 1 by itself, or may read a program (firmware or software) stored in the auxiliary storage unit 102 into the main storage unit 101 and execute the program to control the operation of the electronic device 1. The central processing unit 100 also has a hardware configuration for implementing a lower layer of the electronic device 1, such as a physical layer, a MAC layer, or the like.

The main storage unit 101 is a readable and writable memory, and stores information required for an operation of the central processing unit 100.

The auxiliary storage unit 102 is a storage unit having a recording medium, such as a flash memory, a hard disk, an optical disc, or the like. A program relating to an application to be executed in the electronic device 1 (hereinafter simply referred to as an application) is stored in the auxiliary storage unit 102. Application attribute information is added as specific information indicating an application attribute to an application. Also, an application continuation program according to the present invention is stored in the auxiliary storage unit 102. The application continuation program is a program for determining whether or not an application (hereinafter referred to as a substitute application) which is used instead of an application which is executed in another electronic device, should be executed in the electronic device 1. The application continuation program is read into the main storage unit 101 by the central processing unit 100, and is executed by the central processing unit 100, thereby achieving an operation of the present invention. The application continuation program may be firmware previously stored in the electronic device, or software stored later in the electronic device. The application continuation program may be stored in a computer readable recording medium, and may be stored from the recording medium into the auxiliary storage unit 102. Also, the application continuation program may be downloaded via the network 6 from another electronic device, and may be then stored into the auxiliary storage unit 102. The substitute application includes an identical function application which has a function identical to that of an application executed by another electronic device, and a relevant function application which has a function relevant to an application executed by another electronic device. The relevant function application is an application which can provide a service similar to that which is provided by an application executed by another electronic device, or an application which can provide a service which assists an application which is executed by another electronic device.

For example, when an application which is executed by the electronic device 1 is a JAVA (R) application, a program relating to the application is a JAR file.

The application attribute information refers to information indicating a feature of an application, such as an application name, an application source, information about a profile required to operate the application, or the like.

For example, in a JAVA (R) application in conformity with the MIDP profile which is a standard profile for JAVA(R) mobile devices, application attribute information is described and provided in a JAD file. However, even when the application attribute information, such as a JAD file, is not provided, the electronic device 1 can obtain information, such as an application size or the like, as application attribute information, by analyzing a JAR file which is a main body of a JAVA (R) application.

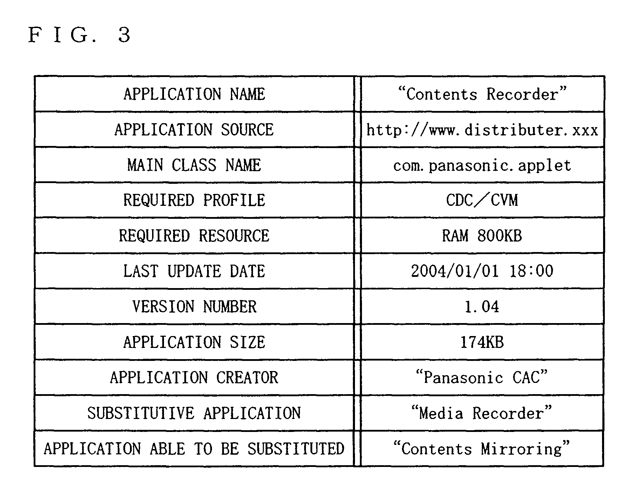

FIG. 3 is a diagram illustrating an implementation example of application attribute information in the form of a table . In FIG. 3, information indicating an application attribute is registered in each entry. Each entry of FIG. 3 will be described.

In APPLICATION NAME, a name given to an application is described.

In APPLICATION SOURCE, a distribution source of the application with respect to an electronic device is described. In FIG. 3, the application source is described in the form of URL, and may be described as other information.

In MAIN CLASS NAME, a name of a class in which a main method which is a method called first when an application is started is implemented, is described.

In REQUIRED PROFILE, information, such as a configuration, a profile, a library, and the like, which is required to operate an application, is described.

In REQUIRED RESOURCE, a resource amount required to operate the application is described.

In LAST UPDATE DATE, a date on which the application was last updated is described.

In VERSION NUMBER, a version management number assigned to the application is described.

In APPLICATION SIZE, a size of a main body (a JAR file in the case of JAVA(R)) of the application is described.

In APPLICATION CREATOR, identification information indicating a creator of the application is described. Although a character string indicating a name of a creator is described in FIG. 3, other information may be described.

In SUBSTITUTIVE APPLICATION, information for identifying another application is described. This entry indicates that, when the application is interrupted during execution, an application recorded in this entry can take over the executed state of the interrupted application and, as a substitute, continue a service. It will be described below as to how this entry is used.

In APPLICATION ABLE TO BE SUBSTITUTED, information for identifying another application is described. This entry indicates that, when an application corresponding to the information described in this entry is interrupted during execution, the application described in APPLICATION NAME can take over the executed state of an application able to be substituted, and continue a service. It will be described below as to how this entry is used.

FIG. 3 is an implementation example of application attribute information. A portion of the entries in the table of FIG. 3 may be omitted, or another entry indicating information about another attribute may be included.

The communication unit 103 has a function for transmission/reception of data with respect to other electronic devices connected to the network 6. In the present invention, the communication unit 103 may use any communication scheme, such as a modulation/demodulation scheme, a media access scheme, or the like, i.e., the communication scheme is not particularly limited.

The input unit 104 is a device for inputting a user's operation, such as a button switch, a keyboard, a mouse, a touch panel, or the like.

The output unit 105 is a device for outputting a result of a process in the central processing unit 100, such as a liquid crystal display, a loudspeaker, or the like.

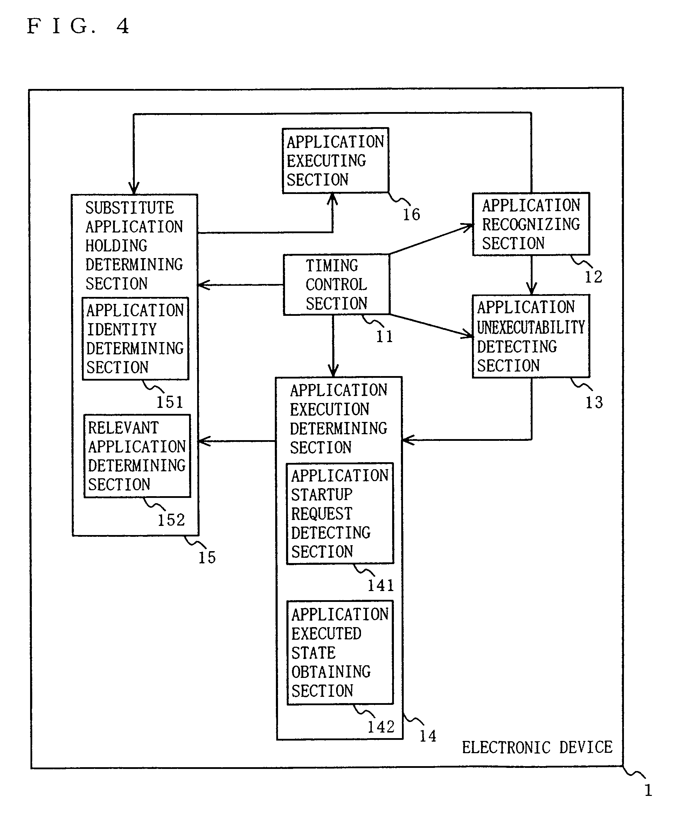

FIG. 4 is a block diagram illustrating a functional configuration of an electronic device when the application continuation program is executed. Note that, in this embodiment, at least one of the electronic devices 1 to 5 can execute the application continuation program. Here, for the sake of simplicity, it is assumed that the electronic device 1 executes the application continuation program, the electronic device 2 executes an application, and the electronic device 1 continues the execution of the application executed by the electronic device 2. As described above, substitute applications include an identical function application and a relevant function application. In this embodiment, if there is an identical function application, the electronic device 1 may execute the identical function application, and if there is not an identical function application, the electronic device 1 may execute a relevant function application. Alternatively, it may be previously determined that the electronic device 1 executes either an identical function application or a relevant function application as a substitute application. Although it is here assumed that the functional blocks of FIG. 4 are implemented by software, i . e. , by executing a program, the functional blocks of FIG. 4 may be implemented by hardware.

In FIG. 4, the electronic device 1 comprises a timing control section 11, an application recognizing section 12, an application unexecutability detecting section 13, an application execution determining section 14, a substitute application holding determining section 15, and an application executing section 16.

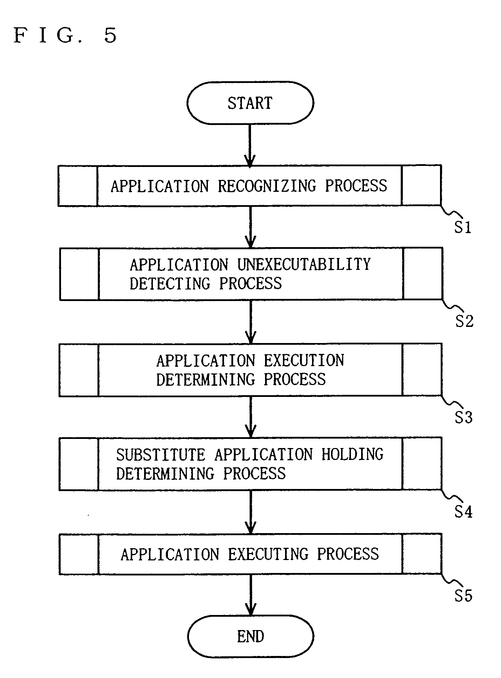

FIG. 5 is a flowchart illustrating a rough outline of an operation of the electronic device 1 when the application continuation program is executed. Hereinafter, the rough outline of the operation of the electronic device 1 when the application continuation program is executed will be described with reference to FIG. 5.

When the timing control section 11 determines that predetermined timing has arrived, the application recognizing section 12 recognizes an application held by another electronic device (step S1).

Next, when the timing control section 11 determines that predetermined timing has arrived, the application unexecutability detecting section 13 detects whether or not the application held by the other electronic device which has been recognized by the application recognizing section 12 is unexecutable (step S2).

When the application unexecutability detecting section 13 detects an unexecutable application, the application execution determining section 14 determines whether or not a substitute application should be executed instead of the unexecutable application (step S3).

When the application execution determining section 14 determines that a substitute application should be executed, the substitute application holding determining section 15 determines whether or not a substitute application is held by the electronic device 1 (step S4).

When the substitute application holding determining section 15 determines that a substitute application is held, the application executing section 16 executes the substitute application (step S5).

Hereinafter, a detailed operation of each functional block will be described.

The application executing section 16 interprets and executes an application. Although it is here assumed that the function of the application executing section 16 is performed by executing the application continuation program, the application executing section 16 is a function provided in the electronic device even when the application continuation program is not executed. Therefore, the application executing section 16 may command the function (another program) in the electronic device to execute a substitute application. Note that it is here assumed that the electronic device 1 executes the application continuation program. The electronic device 2 which does not execute the application continuation program needs to comprise at least the application executing section 16 so as to execute an application.

For the application executing section 16, an environment for executing an application is not particularly limited as long as it can interpret and execute the application. For example, the application executing section 16 is implemented in an existing environment, such as a JAVA (R) virtual machine, a . NET execution environment, BREW which is a program distribution execution environment adopted for mobile telephones manufactured by KDDI (R), or the like.

In this embodiment, when illustration is required, the application executing section 16 is assumed to be implemented in a JAVA(R) virtual machine environment, and an application is assumed to be a JAVA(R) application.

The application executing section 16 has a capability to determine whether or not an application can be newly started up. Therefore, the application executing section 16 can obtain information about an available hardware resource amount which can be used in the device itself. The available resource amount refers to a space which is not occupied by any operating application and can be used to operate a new application, of a space allocated for execution of applications of a memory in the electronic device 1.

The application executing section 16 performs the determination by monitoring the resource amount in an electronic device which can be used. For example, when the application executing section 16 is implemented as a JAVA(R)virtual machine, a register (not shown) for recording a status of use of a heap memory, such as a used or unused amount of a total heap memory held by the JAVA (R) virtual machine, a used amount of the heap memory for each application, or the like, is provided, and a register recorded information examining means (not shown) for examining information recorded in the register as required (e.g., before startup of an application, during operation of an application, upon release of an application, etc.) is provided, whereby the application executing section 16 can monitor an available resource amount.

If an application holds information about "a resource amount required to operate the application" as application attribute information, the application executing section 16 compares information about an available hardware resource amount which can be used in the electronic device 1 with the information about "a resource amount required to operate the application", thereby making it possible to determine whether or not the application can be operated.

The application executing section 16 also has a capability to output information indicating a state of execution of an application partway through the execution of the application (hereinafter referred to as application executed state information).

As a specific example of the application executed state information, an application for performing a shogi game will be discussed. Typically, once the game is started, the application is executed without interruption until the game is over. However, if the game is desired to be interrupted partway through the game and resumed later, it is necessary to record information about the positions of komas (a "koma" is one of the pieces used in playing shogi, like a chessman in chess) and captured koma (s) at the time of interruption. Thus, the application executed state information refers to information indicating a state of an application partway through execution. The application executed state information includes information required to resume an application after interruption of execution.

When an application is a JAVA (R) application, a currently executed object is recorded as application executed state information.

As a means for outputting a state of a currently executed object, JAVA (R) supports serialization. Serialization refers to conversion of an attribute value or a structure of an object into a form which can be handled as a byte sequence. Specifically, by serialization, for example, data having a complicated structure which indicates a state of an application partway through execution, is output in a byte sequence stream or a file format. The byte sequence serves as application executed state information.

Instead of using the serialization function of converting an object into a byte sequence, an application may have a means for outputting application executed state information in other formats. For example, a number of game applications have a capability to describe an intermediate state of the game (application executed state information) in some format. The application executed state information may be described in a general-purpose format, such as XML, HTML, or the like, or may be described in a format which is uniquely defined in an application.

The application recognizing section 12 has a capability to obtain a feature of an application held by another electronic device which is connected via the network 6 and can be therefore communicated with. The application recognizing section 12 obtains application attribute information of an application held by another electronic device, via the network 6, to obtain a feature of the application held by the other electronic device.

The substitute application holding determining section 15 determines whether or not a substitute application which can substitute for an application held by another electronic device recognized by the application recognizing section 12, is held by the electronic device 1. The substitute application holding determining section 15 includes an application identity determining section 151 and a relevant application determining section 152.

The application identity determining section 151 compares application attribute information of an application held by another electronic device recognized by the application recognizing section 12, with application attribute information of an application held by the electronic device 1, to determine whether or not an identical function application is held in the electronic device 1, and creates and stores a table in which the identical function application held by the electronic device 1 is associated with the application held by the other electronic device (hereinafter referred to as an identity table).

The relevant application determining section 152 creates and stores a table in which an application held by another electronic device is associated with a relevant function application held by the electronic device 1 (hereinafter referred to as a relevance table).

When the application unexecutability detecting section 13 detects that an application cannot be executed in another electronic device, the substitute application holding determining section 15 determines whether or not a substitute application which is executed instead of the unexecutable application is held by the electronic device 1, with reference to the identity table and/or the relevance table.

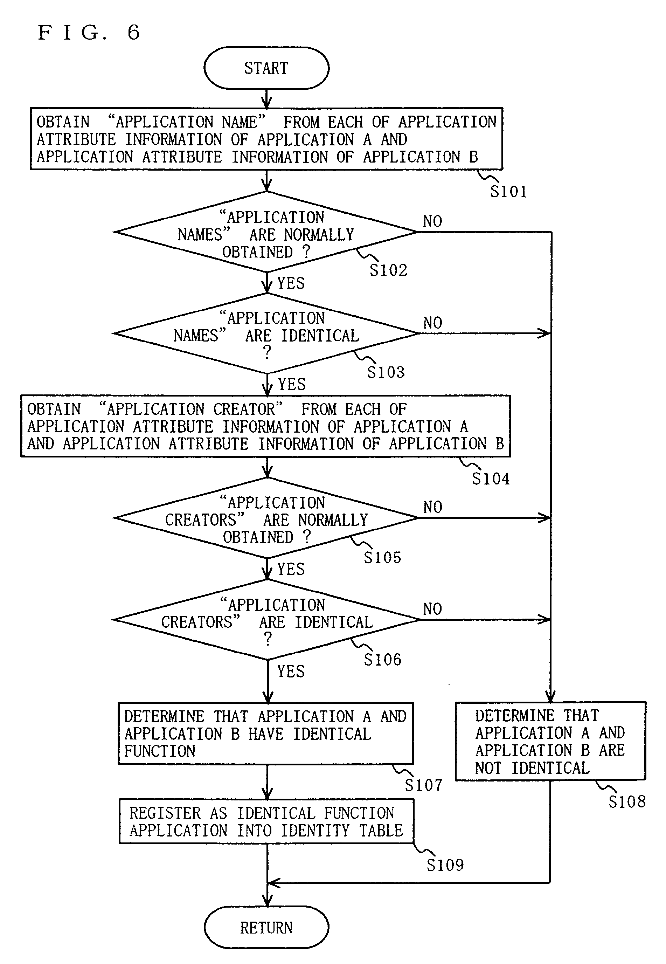

FIG. 6 is a flowchart illustrating an operation of the application identity determining section 151. Hereinafter, a procedure of creating the identity table will be described with reference to FIG. 6. In FIG. 6, an application in the electronic device 1 is represented by an application A, and an application in another electronic device recognized by the application recognizing section 12 is represented by an application B.

Initially, the application identity determining section 151 obtains an "application name" from each of the application attribute information of the application A and the application attribute information of the application B (step S101).

Next, the application identity determining section 151 determines whether or not an "application name" (information to be compared) has been normally obtained from both pieces of the application attribute information (step S102). When an "application name" (information to be compared) has been obtained from neither the application A nor B, the application identity determining section 151 cannot confirm the identity of both the applications, and goes to an operation of step S108. On the other hand, when an "application name" has been normally obtained, the application identity determining section 151 goes to an operation of step S103.

In step S103, the application identity determining section 151 determines whether or not the "application names" of both pieces of the application attribute information are identical to each other. When the "application names" are not identical, the application identity determining section 151 cannot confirm the identity of both the applications, and goes to step S108. On the other hand, when the "application names" are identical, the application identity determining section 151 goes to an operation of step S104.

In step S104, the application identity determining section 151 obtains an "application creator" from each of the application attribute information of the application A and the application attribute information of the application B.

Next, the application identity determining section 151 determines whether or not an "application creator" (information to be compared) has been normally obtained from both pieces of the application attribute information (step S105). When an "application creator" (information to be compared) has been obtained from neither the application A nor B, the application identity determining section 151 cannot confirm the identity of both the applications, and goes to an operation to step S108. On the other hand, when an "application creator" has been normally obtained, the application identity determining section 151 goes to an operation of step S106.

In step S106, the application identity determining section 151 determines whether or not the "application creators" of both pieces of the application attribute information are identical to each other. When the "application creators" are not identical, the application identity determining section 151 cannot confirm the identity of both the applications, and goes to an operation of step S108. On the other hand, when the "application creators" are identical, the application identity determining section 151 goes to an operation of step S107.

In step S107, the application identity determining section 151 determines that the application A is an application having the same function as that of the application B. Next, the application identity determining section 151 registers the application A as an identical function application into an identity table in association with the application B (step S109), and returns so that the processes of step S101 and thereafter are similarly executed for another application recognized by the application recognizing section 12.

In step S108, the application identity determining section 151 determines that the application A and the application B are not identical to each other, and returns so that the processes of step S101 and thereafter are similarly executed for another application recognized by the application recognizing section 12.

The operation of FIG. 6 is repeatedly executed for all applications in the other electronic device recognized by the application recognizing section 12.

An example of the procedure of creating the identity table has been heretofore described. Note that, in the procedure, an "application name" and an "application creator" are used for determination of the identity of applications, however, the present invention is not necessarily limited to these. The application identity determining section 151 may perform identity determination by comparison using a combination of other pieces of application attribute information. The number of pieces of application attribute information used for comparison is not particularly limited.

Note that, in FIG. 6, the application identity determining section 151 only compares the application A with the application B in one-to-one correspondence. However, when the electronic device 1 holds a plurality of applications, the application identity determining section 151 needs to determine the presence of a function identical to that of the application B for all the applications held by the electronic device 1, to create the identity table. Specifically, after step S108, the application identity determining section 151 may obtain application attribute information of an application other than the application A held by the electronic device 1, and go to the operations of step S101 and thereafter. When there is not an application having a function identical to that of the application B among all the applications held by the electronic device 1, the application identity determining section 151 determines whether or not an application having an identical function is held in the electronic device 1 for another applications held by the other electronic device.

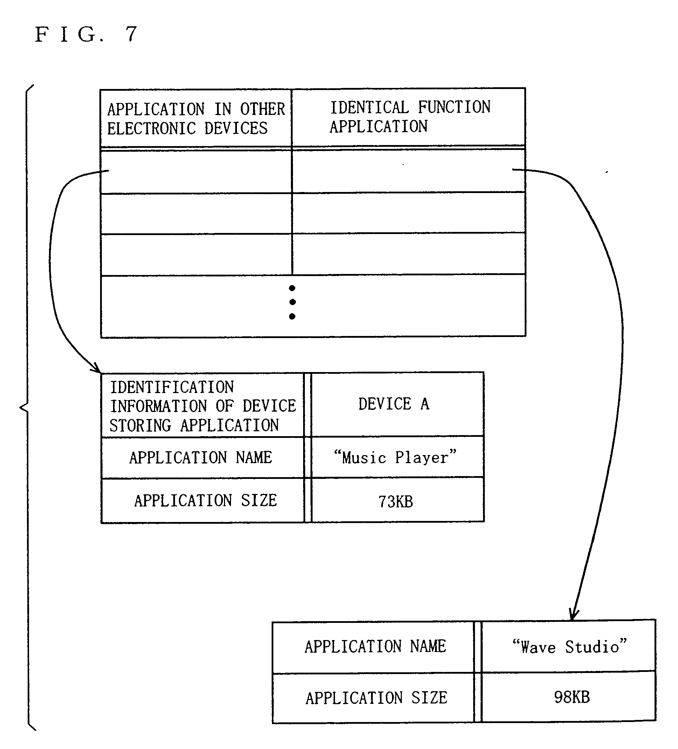

FIG. 7 is a diagram illustrating an exemplary identity table. As illustrated in FIG. 7, the identity table is composed of sets of information about an application held by another electronic device (the left column in the table) and information about an identical function application determined to have a function identical to that of the application held by the other electronic device (the right column in the table).

As illustrated in FIG. 7, as the information about an application of another electronic device, "identification information of a device in which an application is stored", an "application name", and an "application size" are registered. The information about an application of another electronic device is not limited to the information of FIG. 7 as long as the information can specify the application held by the other electronic device.

As illustrated in FIG. 7, as the information about an identical function application, an "application name" and an "application size" are registered. The information about an identical function application is not limited to the information of FIG. 7 as long as the information can specify an application held by the electronic device 1.

In this embodiment, the relevant application determining section 152 associates an application held by another electronic device with a relevant function application held by the electronic device 1 as indicated in the following (a), (b), (c), and (d).

(a) In application attribute information of an application held by another electronic device, a condition under which the other application can serve as a substitute application for an application of the electronic device 1, is described. For example, the "substitutive application" of FIG. 3 is the condition. The relevant application determining section 152 reads the condition to determine whether or not an application meeting the condition is held in the electronic device 1. When such an application is held, the relevant application determining section 152 registers the held application as a relevant function application into the relevance table in association with the application held by the other electronic device.

(b) In application attribute information of an application held by the electronic device 1, a condition under which the application held by the electronic device 1 can serve as a substitute application for another application, is described. For example, the "application able to be substituted" of FIG. 3 is this condition. The relevant application determining section 152 reads this condition to determine whether or not there is an application meeting the condition among applications in another electronic device recognized by the application recognizing section 12. When there is an application meeting the condition, the relevant application determining section 152 registers the application held by the electronic device 1 as a relevant function application for the application held by the other electronic device into the relevance table in association with the application held by the other electronic device.

(c) The relevance table is previously stored in the electronic device 1.

(d) The relevance table is registered by a user.

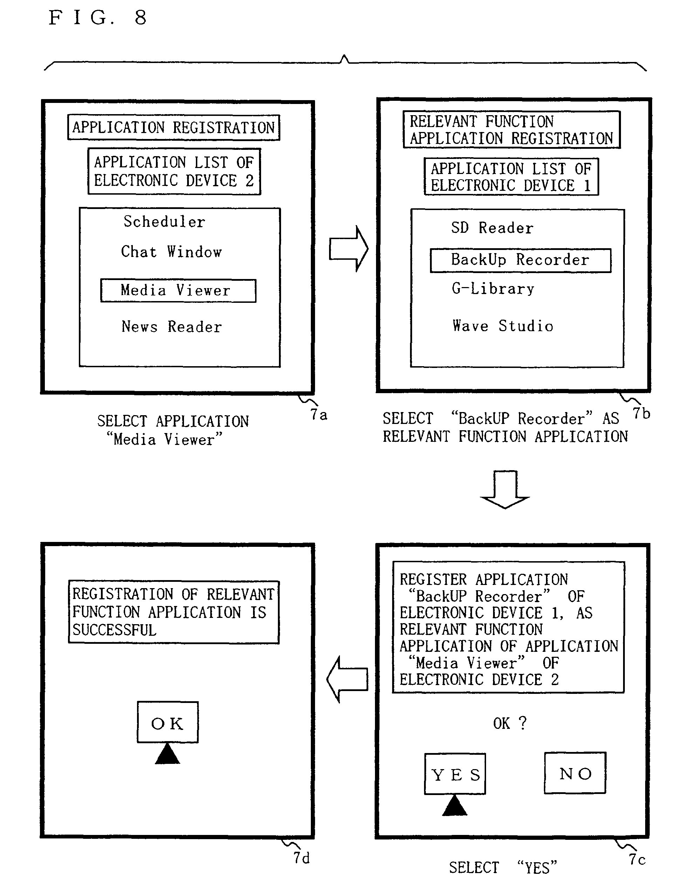

FIG. 8 is a diagram for explaining a procedure when a user registers the relevance table.

The relevant application determining section 152 can cause the output unit 105 to display user interfaces 7a, 7d, 7c and 7d in FIG. 8.

The user interface 7a is a screen which indicates a list of applications held by another electronic device, and is used to select and specify an application of the other electronic device which is desired to be registered into the relevance table. Here, a list of applications held by the electronic device 2 is illustrated. The relevant application determining section 152 obtains application specific information held by the electronic device 2 recognized by the application recognizing section 12, thereby displaying the list of applications held by the electronic device 2 on the user interface 7a. The user selects and specifies an application registered in the relevance table from those displayed on the user interface 7a. It is here assumed that an application "Media Viewer" is selected. After specifying on the user interface 7a, the relevant application determining section 152 displays the user interface 7b.

The user interface 7b is a screen which indicates a list of applications held by the electronic device 1, and is used to select and specify an application of the electronic device 1 which is desired to be associated with the application specified by the user interface 7a. The relevant application determining section 152 obtains application specific information held by the electronic device 1, thereby displaying the list of applications held by the electronic device 1 on the user interface 7b. The user selects and specifies an application registered as a relevant function application, from the list displayed on the user interface 7b. It is here assumed that "BackUp Recorder" is selected as the relevant function application. After specifying on the user interface 7b, the relevant application determining section 152 displays the user interface 7c.

The user interface 7c is a screen for confirming correspondence between an application and a relevant function application. It is here assumed that the user specifies "Yes". Thereby, the relevant application determining section 152 registers the application and the relevant function application into the relevance table, and displays that the registration is successful (user interface 7d).

The relevant application determining section 152 holds the relevance table in some form.

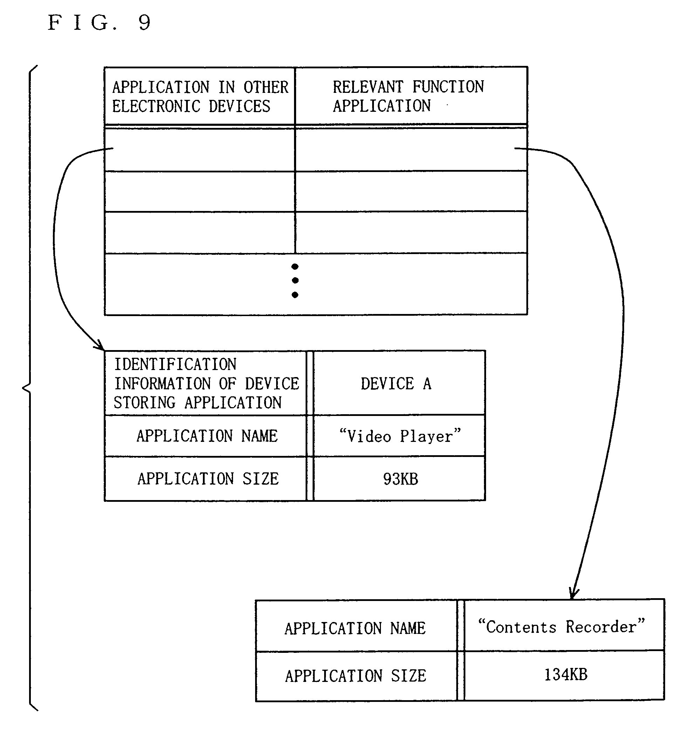

FIG. 9 is a diagram illustrating an exemplary relevance table. As illustrated in FIG. 9, the relevance table is composed of sets of information about an application held by another electronic device (the left column in the table) and information about a relevant function application (the right column in the table).

As illustrated in FIG. 9, as information about an application of another electronic device, "identification information of a device in which an application is stored", an "application name", and an "application size" are registered. Information about another application is not limited to the information illustrated in FIG. 9 as long as it can specify the application held by another electronic device.

As illustrated in FIG. 9, as information about a relevant function application, an "application name" and an "application size" are registered. Information about a relevant function application is not limited to the information of FIG. 9 as long as it can specify an application held by the electronic device 1.

The application unexecutability detecting section 13 detects whether or not an application held by another electronic device connected via the network 6 is in an executable state. In this embodiment, an application is not in an executable state in the following two roughly assumed cases (A) and (B).

(A) Another electronic device connected via the network 6 is not kept in an energized state.
(B) An application cannot be executed due to a problem with a resource constraint of the application executing section of another electronic device connected via the network 6.

The application unexecutability detecting section 13 determines whether or not another electronic device falls into the state (A) or (B), by monitoring the other electronic device.

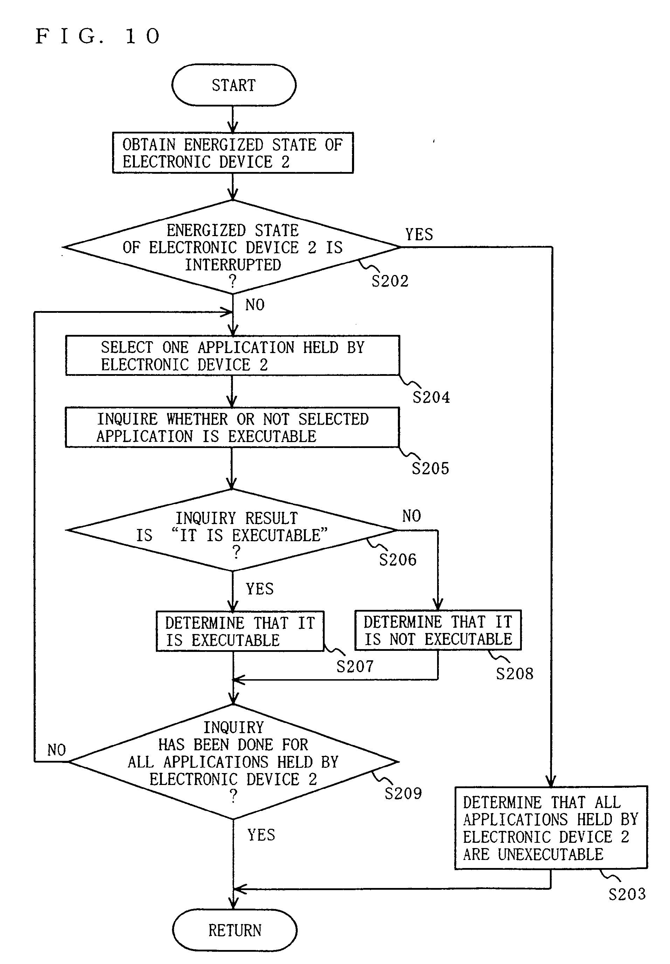

FIG. 10 is a flowchart illustrating an exemplary operation of the application unexecutability detecting section 13. Hereinafter, the operation of the application unexecutability detecting section 13 will be described with reference to FIG. 10. Note that, in FIG. 10, for the sake of simplicity, an example in which it is determined whether or not an application in the electronic device 2 is unexecutable is illustrated, however, the application unexecutability detecting section 13 performs a process similar to that of FIG. 10 for all the other electronic devices connected to the network 6.

Initially, the application unexecutability detecting section 13 obtains an energized state of the electronic device 2 (step S201) to determine whether or not the energized state of the electronic device 2 has been interrupted (step S202) . In steps S201 and S202, determination is performed for the case (A).

For example, in the specification of UPnP which is a connection standard for home appliance networks, an electronic device which is connected to an network and is in an energized state, is supposed to emit a signal to other electronic devices connected to the network at predetermined intervals. When a signal is not regularly emitted from an electronic device, the energized state of the electronic device is considered to have been interrupted.

In step S202, when it is determined that the energized state of the electronic device 2 has been interrupted, the application unexecutability detecting section 13 goes to an operation of step S203, and determines that all applications held by the electronic device 2 are in an unexecutable state.

In step S202, when it is determined that the energized state of the electronic device 2 has not been interrupted, the application unexecutability detecting section 13 goes to operations of step S204 and thereafter. By the operations of step S204 and thereafter, determination is performed for the case (B).

In step S204, the application unexecutability detecting section 13 selects one of the applications held by the electronic device 2 recognized by the application recognizing section 12. Next, the application unexecutability detecting section 13 inquires the application executing section of the electronic device 2 whether or not the selected application is executable (step S205). When the application of the electronic device 2 holds information about a "resource amount required to operate an application" as application specific information, the application executing section of the electronic device 2 determines whether or not the application is executable, based on information about an available hardware resource amount which can be used in the electronic device 2, and transmits the determination result to the application unexecutability detecting section 13 of the electronic device 1. The application unexecutability detecting section 13 receives the determination result transmitted from the electronic device 2.

Next, the application unexecutability detecting section 13 determines whether or not the result of the inquiry transmitted from the electronic device 2 is that "the selected application is executable" (step S206). When the inquiry result is that "the selected application is executable", the application unexecutability detecting section 13 determines that the application selected in step S204 is in an executable state in the electronic device 2 (step S207), and goes to an operation of step S209. On the other hand, when the inquiry result is that "the selected application is not executable", the application unexecutability detecting section 13 determines that the application selected in step S204 is not in an executable state in the electronic device 2 (step S208), and goes to an operation of step S209.

In step S209, the application unexecutability detecting section 13 determines whether or not the inquiry about executability has been performed for all the applications held by the electronic device 2 recognized by the application recognizing section 12. When the inquiry has not been performed for all the applications, the application unexecutability detecting section 13 returns to the operation of step S204, and performs the inquiry for another application. On the other hand, when the inquiry has been performed for all the applications, the electronic device 1 returns to the whole operation.

When there is an application which the application unexecutability detecting section 13 has determined that is unexecutable, the application execution determining section 14 determines whether or not a substitute application which can substitute for the application should be executed. The application execution determining section 14 includes an application startup request detecting section 141 and an application executed state obtaining section 142.

The application startup request detecting section 141 detects a startup request with respect to an application present on another electronic device, and specifies what application held by what application the startup request is directed to.

In the present invention, regarding a startup request with respect to an application, the following two cases (C) and (D) are roughly assumed.

(C) A startup request including information for specifying an electronic device and an application is transmitted from another electronic device via the network 6.
(D) The electronic device 2 itself issues a startup request without via the network 6. For example, the user of the electronic device 2 designates startup of an application held by the electronic device 2 with respect to the electronic device 2; a startup request is issued with respect to an application held by the electronic device 2 using an internal condition, such as a timer, an application or the like, of the electronic device 2 as a trigger; and the like.

An example of the application startup request detecting section 141 which determines whether or not a startup request has been issued with respect to an application held by the electronic device 2, is implemented as in the following two cases (E) and (F).

(E) The application startup request detecting section 141 monitors a state of communication on the network 6. If a startup request has been issued with respect to an application held by the electronic device 2 from a device connected to the network 6 during monitoring of the communication state, the application startup request detecting section 141 determines that the startup request of the case (C) has been issued.

(F) When a startup request has been issued with respect to an application held in the electronic device 2, the application executing section of the electronic device 2 informs the electronic device 1 of the issuance in response to a request from the application startup request detecting section 141 of the electronic device 1. Therefore, the application startup request detecting section 141 can determine whether or not the startup request of the case (D) has been issued, by inquiring the electronic device 2 whether or not a startup request has been issued therein.

When the application startup request detecting section 141 comprises a mechanism or mechanisms of any one or both of (E) and (F), it is possible to detect a startup request with respect to an application held by another electronic device.

The application executed state obtaining section 142 obtains application executed state information generated by the application executing section of the electronic device 2, from the electronic device 2. As described above, the application executed state information is generated by the application executing section of the electronic device 2 using a serialization technique or the like in the course of execution of an application. The application executed state obtaining section 142 can find a state of an application partway through execution on the electronic device 2 by analyzing the application executed state information.

In the case where there is an application which the application unexecutability detecting section 13 has determined that is unexecutable, if a startup request with respect to the application which the application startup request detecting section 141 has determined that is unexecutable is detected, and/or application executed state information is obtained with respect to the application which the application startup request detecting section 141 has determined that is unexecutable, the application execution determining section 14 determines that a substitute application should be executed instead of the application, and causes the substitute application holding determining section 15 to determine whether or not a substitute application is held. In response to this, the substitute application holding determining section 15 determines whether or not a substitute application is held, by referencing the identity table and/or the relevance table, and when a substitute application is held, causes the application executing section 16 to execute the substitute application.

The timing control section 11 controls timing of execution of the application executing section 16, the application recognizing section 12, the application unexecutability detecting section 13, the application execution determining section 14, and the substitute application holding determining section 15.

Next, a detailed flow of an operation of the electronic device 1 when the application continuation program is executed, will be described. In the first embodiment, four basic process flows are assumed using the above-described configuration combination. In addition, a flow obtained by further combining the four basic processes will be assumed. A first basic process is a process in which, assuming that an application held by another device is in an unexecutable state, when a startup request is detected with respect to the application, the electronic device 1 executes an identical function application as a substitute application. A second basic process is a process in which, when it is detected that an application held by another device is unexecutable, the electronic device 1 executes an identical function application as a substitute application so as to continue the executed state of the application. A third basic process is a process in which, assuming that an application held by another device is unexecutable, when a startup request is detected with respect to the application, the electronic device 1 executes a relevant function application as a substitute application. A fourth basic process is a process in which, when it is detected that an application held by another device is unexecutable, the electronic device 1 executes a relevant function application as a substitute application so as to continue the executed stat of the application. The first to fourth basic processes can be combined with each other.

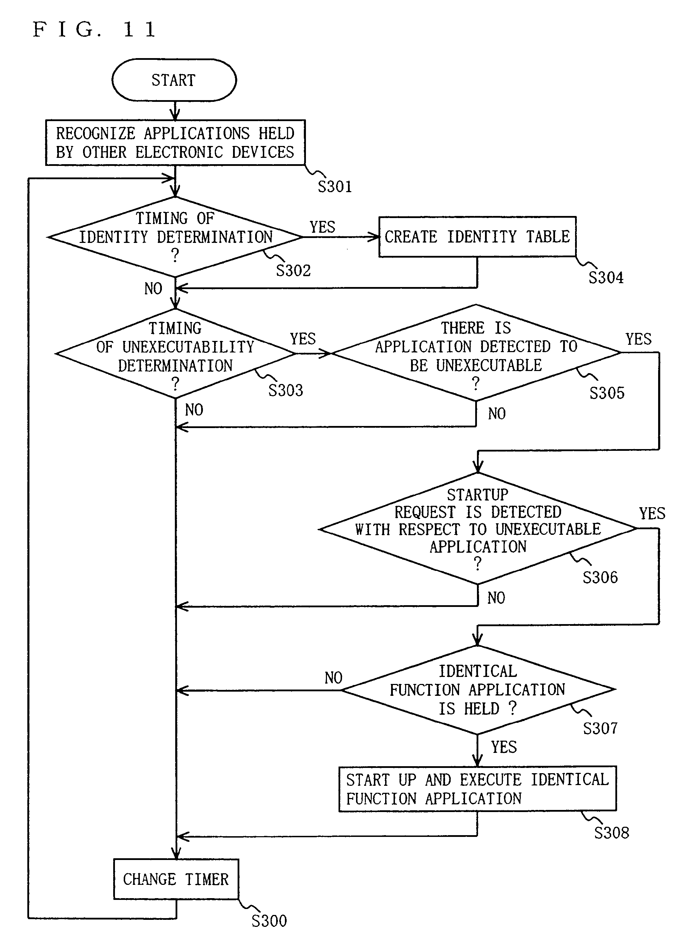

FIG. 11 is a flowchart illustrating an operation of the electronic device 1 when the first basic process is executed. Hereinafter, a flow of the first basic process will be described with reference to FIG. 11. Note that the process of FIG. 11 is ended along with the end of the application continuation program.

Initially, the application recognizing section 12 recognizes applications held by the other electronic devices (step S301). The process of step S301 corresponds to the process of step S1 of FIG. 5.

Next, the timing control section 11 determines that timing of starting the process of the application identity determining section 151 has arrived (step S302). When the timing has not arrived, the timing control section 11 goes to an operation of step S303. On the other hand, when the timing has arrived, the application identity determining section 151 determines whether or not an identical function application is held by the electronic device 1 with respect to the applications held by the other electronic devices recognized in step S301. If an identical function application is held, the application identity determining section 151 creates combinations of the applications held by the other electronic devices and the identical function applications as an identity table (step S304), and the electronic device 1 goes to the operation of step S303.

In step S303, the timing control section 11 determines whether or not timing of starting the process of the application unexecutability detecting section 13 has arrived. When the timing has not arrived, the timing control section 11 goes to an operation of step S300. On the other hand, when the timing has arrived, the application unexecutability detecting section 13 determines whether or not there is an application of another electronic device which is detected to be unexecutable (step S305). The process of step S305 corresponds to the process of step S2 of FIG. 5. When there is not an unexecutable application, the electronic device 1 goes to the operation of step S300. On the other hand, when there is an unexecutable application, the electronic device 1 goes to an operation of step S306.

In step S306, the application execution determining section 14 determines whether or not the application startup request detecting section 141 has detected a startup request with respect to the unexecutable application. When the startup request has not been detected, the electronic device 1 goes to the operation of step S300. On the other hand, when the startup request has been detected, the application execution determining section 14 determines that a substitute application should be executed, and causes the substitute application holding determining section 15 to execute an operation of step S307. The process of step S306 corresponds to the process of step S3 of FIG. 5.

In step S307, the substitute application holding determining section 15 determines whether or not an identical function application which can substitute for an application for which the startup request has been issued is held, with reference to the identity table created by the application identity determining section 151 in step S304. When the identical function application is not held, the electronic device 1 goes to the operation of step S300. On the other hand, when the identical function application is held, the substitute application holding determining section 15 causes the application executing section 16 to execute an operation of step S308. The process of step S307 corresponds to the process of step S4 of FIG. 5.

In step S308, the application executing section 16 starts up and executes the identical function application which the substitute application holding determining section 15 has determined that is held. Thereafter, the electronic device 1 goes to the operation of step S300. The process of step S308 corresponds to the process of step S5 of FIG. 5.

In step S300, the electronic device 1 changes an internal timer, and returns to the operation of step S302. The electronic device 1 regularly executes the process by the application identity determining section 151 and the process by the application unexecutability detecting section 13. Thereby, it is guaranteed that the identity determination and the unexecutability detection are regularly performed. Note that the determination processes of the application identity determining section 151 and the application unexecutability detecting section 13 do not need to be performed in a particular orderly sequence, i.e., so long as the processes are regularly executed, the process cycles do not need to be the same. For example, the application identity determining section 151 is executed every 300 sec and the application unexecutability detecting section 13 is executed every 5 sec. The processes may be executed with respective specific execution timing.

An exemplary service using the first basic process will be described.

A first home server is assumed to provide a service which regularly backups and copies data of the other electronic devices connected to a network to itself. The first home server holds an application which executes backup (first backup application) . The first backup application executes the service when receiving a startup request from an internal timer.

It is here assumed that the first backup application of the first home server falls into an unexecutable state.

A second home server connected via a network to the first home server holds a second backup application which has a function identical to that of the first backup application. When the second home server executes the application continuation program to detect that the first backup application has fallen into the unexecutable state and a startup request has been supplied to the first backup application by the internal timer of the first home server, the second home server starts up the second backup application. Thus, the second home server provides a service instead of the first home server which cannot start up the first backup application.

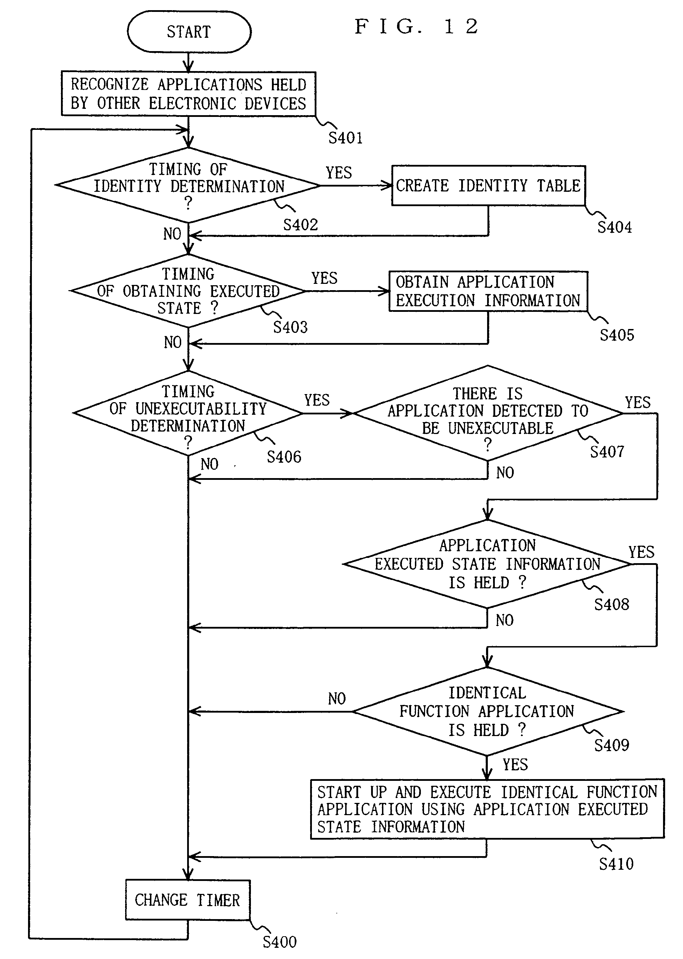

FIG. 12 is a flowchart illustrating an operation of the electronic device 1 when the second basic process is executed. Hereinafter, a flow of the second basic process will be described with reference to FIG. 12.

Initially, the application recognizing section 12 recognizes applications held by the other electronic devices (step S401). The process of step S401 corresponds to the process of step S1 of FIG. 5.

Next, the timing control section 11 determines that timing of starting the process of the application identity determining section 151 has arrived (step S402). When the timing has not arrived, the timing control section 11 goes to an operation of step S403. On the other hand, when the timing has arrived, the application identity determining section 151 determines whether or not an identical function application is held by the electronic device 1 with respect to the applications held by the other electronic devices recognized in step S401. If an identical function application is held, the application identity determining section 151 creates combinations of the applications held by the other electronic devices and the identical function application as an identity table (step S404), and the electronic device 1 goes to the operation of step S403.

In step S403, the timing control section 11 determines whether or not timing of starting the process of the application executed state obtaining section 142 has arrived. When the timing has not arrived, the timing control section goes to an operation of step S406. On the other hand, when the timing has arrived, the application executed state obtaining section 142 obtains application executed state information of applications executed in the other electronic devices (step S405), and the electronic device 1 goes to the operation of step S406.

In step S406, the timing control section 11 determines whether or not timing of starting the process of the application unexecutability detecting section 13 has arrived. When the timing has not arrived, the timing control section 11 goes to an operation of step S400. On the other hand, when the timing has arrived, the application unexecutability detecting section 13 determines whether or not there is an application of another electronic device which is detected to be unexecutable (step S407). The process of step S407 corresponds to the process of step S2 of FIG. 5. When there is not an unexecutable application, the electronic device 1 goes to the operation of step S400. On the other hand, when there is an unexecutable application, the electronic device 1 goes to an operation of step S408.

In step S408, the application execution determining section 14 determines whether or not application executed state information of the unexecutable application is held by the application executed state obtaining section 142. When the application executed state information is not held, the electronic device 1 goes to the operation of step S400. On the other hand, when the application executed state information is held, the application execution determining section 14 determines that a substitute application should be executed, and causes the substitute application holding determining section 15 to execute an operation of step S409. The process of step S408 corresponds to the process of step S3 of FIG. 5.

In step S409, the substitute application holding determining section 15 determines whether or not an identical function application which has the same function as that of an application corresponding to the held application executed state information is held in the electronic device 1, with reference to the identity table created by the application identity determining section 151 in step S404. When the identical function application is not held, the electronic device 1 goes to the operation of step S400. On the other hand, when the identical function application is held, the substitute application holding determining section 15 causes the application executing section 16 to execute an operation of step S410. The process of step S409 corresponds to the process of step S4 of FIG. 5.

In step S410, the application executing section 16 starts up and executes the identical function application which the substitute application holding determining section 15 has determined that is held. Thereafter, the electronic device 1 goes to the operation of step S400. The process of step S410 corresponds to the process of step S5 of FIG. 5.

In step S400, the electronic device 1 changes an internal timer, and returns to the operation of step S402. The electronic device 1 regularly executes the process by the application identity determining section 151, the process by the application unexecutability detecting section 13, and the process by the application executed state obtaining section 142. Thereby, it is guaranteed that the identity determination, the unexecutability detection, and the obtaining of application executed information are regularly performed. Note that the processes of the application identity determining section 151, the application unexecutability detecting section 13 and the application executed state obtaining section 142 do not need to be performed in a particular orderly sequence, i.e., so long as the processes are regularly executed, the process cycles do not need to be the same.

An exemplary service using the second basic process will be described.

A first AV device is assumed to provide a service which performs broadcast recording. The first AV device holds an application which executes broadcast recording (first recording application), and provides the service.

It is here assumed that the first recording application of the first AV device suddenly falls into an unexecutable state during recording of a broadcast, so that the service is interrupted.

A second AV device connected via a network to the first AV device, holds a second recording application which has a function identical to that of the first recording application. The second AV device executes the application continuation program to obtain application executed state information, such as what channel and with what settings the first recording application executed in the first AV device has recorded.

When the second AV device detects that the first recording application has fallen into an unexecutable state, the second AV device starts up the second recording application 2 to take over the service with the same settings as those with which the first recording application had been executed, based on the obtained application executed state information.

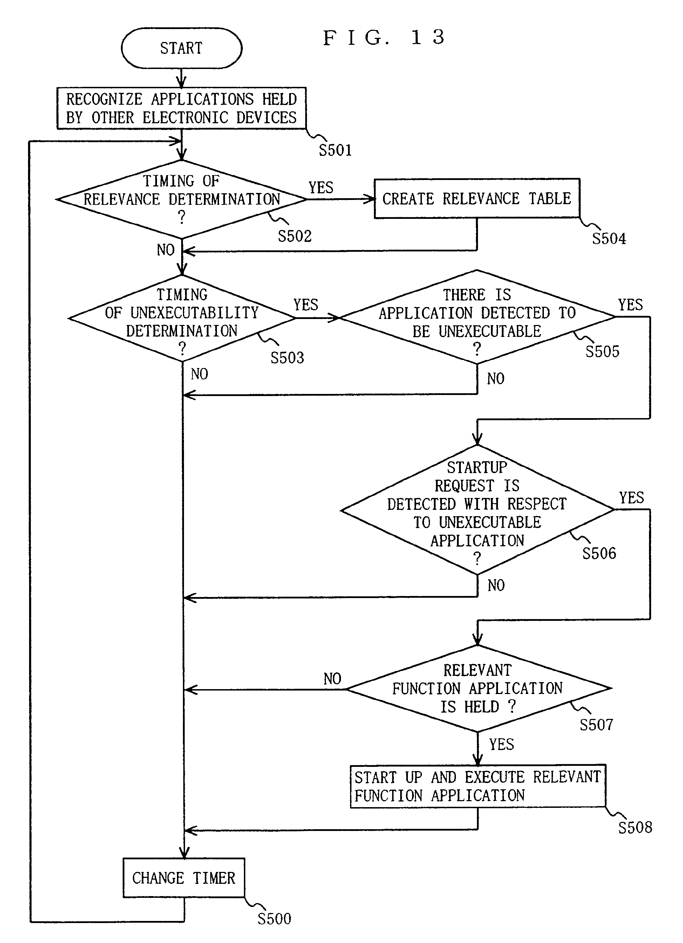

FIG. 13 is a flowchart illustrating an operation of the electronic device 1 when the third basic process is executed. Hereinafter, a flow of the third basic process will be described with reference to FIG. 13.

Initially, the application recognizing section 12 recognizes applications held by the other electronic devices (step S501). The process of step S501 corresponds to the process of step S1 of FIG. 5.

Next, the timing control section 11 determines whether or not timing of starting the process of the relevant application determining section 152 has arrived (step S502) . When the timing has not arrived, the timing control section 11 goes to an operation of step S503. On the other hand, when the timing has arrived, the relevant application determiningsection152executesa process of associating relevant function applications with the applications held by the other electronic devices recognized by step S501 to create a relevance table (step S504). Note that, when the relevance table is previously created, the process of step S504 can be omitted. After step S504, the electronic device goes to the operation of step S503.

In step S503, the timing control section 11 determines whether or not timing of starting the process of the application unexecutability detecting section 13 has arrived. When the timing has not arrived, the timing control section 11 goes to an operation of step S500. On the other hand, when the timing has arrived, the application unexecutability detecting section 13 determines whether or not there is an application of another electronic device which is detected to be unexecutable (step S505). The process of step S505 corresponds to the process of step S2 of FIG. 5. When there is not an unexecutable application, the electronic device 1 goes to the operation of step S500. On the other hand, when there is an unexecutable application, the electronic device 1 goes to an operation of step S506.

In step S506, the application execution determining section 14 determines whether or not the application startup request detecting section 141 has detected a startup request with' respect to the unexecutable application. When the startup request has not been detected, the electronic device 1 goes to the operation of step S500. On the other hand, when the startup request has been detected, the application execution determining section 14 determines that a substitute application should be executed, and causes the substitute application holding determining section 15 to execute an operation of step S507. The process of step S506 corresponds to the process of step S3 of FIG. 5.

In step S507, the substitute application holding determining section 15 determines whether or not a relevant function application which can substitute for an application for which a startup request has been issued is held, with reference to the relevance table created by the relevant application determining section 152 in step S504 (when a relevance table is previously stored, the stored relevance table is referenced). When the relevant function application is not held, the electronic device 1 goes to the operation of step S500. On the other hand, when the relevant function application is held, the substitute application holding determining section 15 causes the application executing section 16 to execute an operation of step S508. The process of step S507 corresponds to the process of step S4 of FIG. 5.

In step S508, the application executing section 16 starts up and executes the relevant function application which the substitute application holding determining section 15 has determined that is held. Thereafter, the electronic device 1 goes to the operation of step S500 . The process of step S508 corresponds to the process of step S5 of FIG. 5.

In step S500, the electronic device 1 changes an internal timer, and returns to the operation of step S502. The electronic device 1 regularly executes the process by the relevant application determining section 152 and the process by the application unexecutability detecting section 13. Thereby, it is guaranteed that the relevant function application determination and the unexecutability detection are regularly performed. Note that the determination processes of the relevant application determining section 152 and the application unexecutability detecting section 13 do not need to be performed in a particular orderly sequence, i.e., so long as the processes are regularly executed, the process cycles do not need to be the same. For example, the relevant application determining section 152 is executed every 300 sec and the application unexecutability detecting section 13 is executed every 5 sec. The processes may be executed with respective specific execution timing.

An exemplary service using the third basic process will be described.

A home server is assumed to provide a service which regularly backups and copies data of the other electronic devices connected to a network to itself. The home server holds an application which executes backup (backup application). The backup application executes the service when receiving a startup request from an internal timer.

It is here assumed that the backup application of the home server falls into an unexecutable state.

A mobile telephone connected to the home server via a network holds a user informing application associated with a relevant function application for the backup application.

When the mobile telephone executes the application continuation program and detects that the backup application of the home server has fallen into an unexecutable state and a startup request has been supplied to the backup application by an internal timer of the home server, the mobile telephone starts up the user informing application. The user informing application performs a service which informs and warns the user that the backup of the home server has failed.

Thus, another service is performed, assisting the service of the backup application.

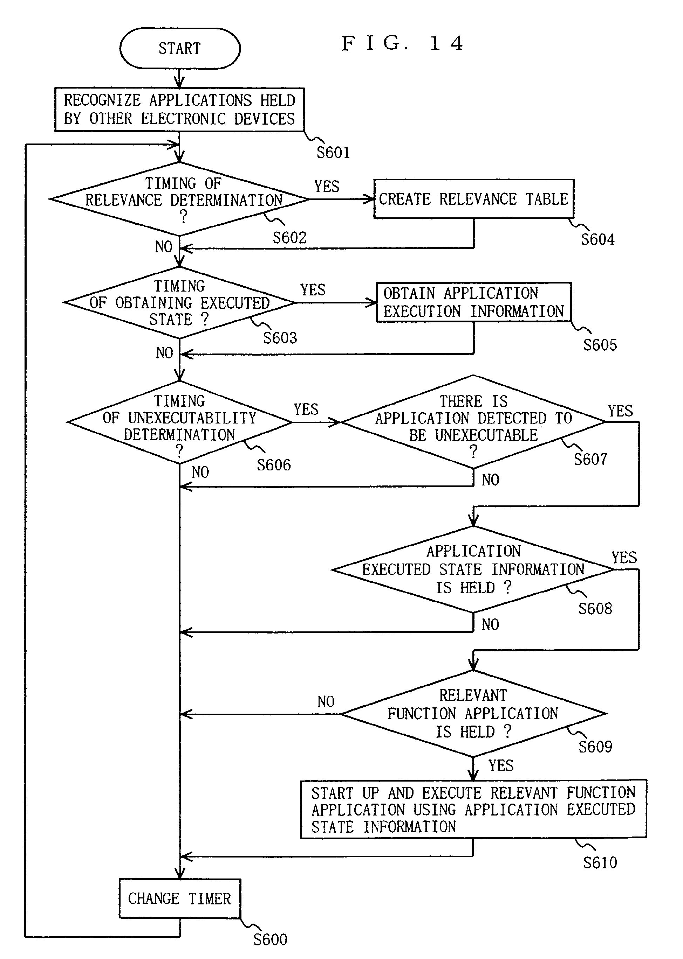

FIG. 14 is a flowchart illustrating an operation of the electronic device 1 when the fourth basic process is executed. Hereinafter, a flow of the fourth basic process will be described with reference to FIG. 14.

Initially, the application recognizing section 12 recognizes applications held by the other electronic devices (step S601). The process of step S601 corresponds to the process of step S1 of FIG. 5.

Next, the timing control section 11 determines whether or not timing of starting the process of the relevant application determining section 152 has arrived (step S602). When the timing has not arrived, the timing control section 11 goes to an operation of step S603. On the other hand, when the timing has arrived, the relevant application determining section 152 executes a process of associating relevant function applications with the applications held by the other electronic devices recognized by step S601 to create a relevance table (step S604). Note that, when the relevance table is previously created, the process of step S604 can be omitted. After step S604, the electronic device goes to the operation of step S603.

In step S603, the timing control section 11 determines whether or not timing of starting the process of the application executed state obtaining section 142 has arrived. When the timing has not arrived, the timing control section goes to an operation of step S606. On the other hand, when the timing has arrived, the application executed state obtaining section 142 obtains application executed state information of applications executed in the other electronic devices (step S605), and the electronic device 1 goes to the operation of step S606.

In step S606, the timing control section 11 determines whether or not timing of starting the process of the application unexecutability detecting section 13 has arrived. When the timing has not arrived, the timing control section 11 goes to an operation of step S600. On the other hand, when the timing has arrived, the application unexecutability detecting section 13 determines whether or not there is an application of another electronic device which is detected to be unexecutable (step S607). The process of step S607 corresponds to the process of step S2 of FIG. 5. When there is not an unexecutable application, the electronic device 1 goes to the operation of step S600. On the other hand, when there is an unexecutable application, the electronic device 1 goes to an operation of step S608.

In step S608, the application execution determining section 14 determines whether or not application executed state information of the unexecutable application is held by the application executed state obtaining section 142. When the application executed state information is not held, the electronic device 1 goes to the operation of step S600. On the other hand, when the application executed state information is held, the application execution determining section 14 determines that a substitute application should be executed, and causes the substitute application holding determining section 15 to execute an operation of step S609. The process of step S608 corresponds to the process of step S3 of FIG. 5.

In step S609, the substitute application holding determining section 15 determines whether or not a relevant function application which can substitute for an application for which a startup request has been issued is held, with reference to the relevance table created by the relevant application determining section 152 in step S604 (when a relevance table is previously stored, the stored relevance table is referenced). When the relevant function application is not held, the electronic device 1 goes to the operation of step S600. On the other hand, when the relevant function application is held, the substitute application holding determining section 15 causes the application executing section 16 to execute an operation of step S610. The process of step S609 corresponds to the process of step S4 of FIG. 5.

In step S610, the application executing section 16 starts up and executes the relevant function application which the substitute application holding determining section 15 has determined that is held. Thereafter, the electronic device 1 goes to the operation of step S600. The process of step S610 corresponds to the process of step S5 of FIG. 5.

In step S600, the electronic device 1 changes an internal timer, and returns to the operation of step S602. The electronic device 1 regularly executes the process by the relevant application determining section 152, the process by the application unexecutability detecting section 13, and the process by the application executed state obtaining section 142. Thereby, it is guaranteed that the relevant function application determination, the unexecutability detection, and the obtaining of application executed information are regularly performed. Note that the processes of the relevant application determining section 152, the application unexecutability detecting section 13 and the application executed state obtaining section 142 do not need to be performed in a particular orderly sequence, i.e., so long as the processes are regularly executed, the process cycles do not need to be the same.

An exemplary service using the fourth basic process will be described.

A mobile telephone is assumed to have a service which provides viewing of a broadcast to the user. The mobile telephone holds an application which displays a broadcast (TV application), and provides the service.

It is here assumed that the TV application of the mobile telephone suddenly falls into an unexecutable state during execution, so that the service is interrupted.

Here, an AV device connected to the mobile telephone via a network holds an application called a recording application which records a broadcast into itself and is associated as a relevant function application of the TV application. The AV device executes the application continuation program to obtain application executed state information which indicates what channel and with what settings the TV application executed by the mobile telephone has made the user view.

When the AV device detects that the TV application of the mobile telephone has fallen into an unexecutable state, the AV device starts up a recording application, and takes over the service with the same settings as those with which a view had been performed based on application executed state information of the TV application, and performs a broadcast recording service.

Thereby, the user of the mobile telephone can view the rest of the broadcast using the AV device later. Thus, another service is performed, assisting the service of the TV application.

As described above, according to the first embodiment, an electronic device recognizes applications held by the other electronic devices, and when detecting an unexecutable application among the recognized applications, determines whether or not a substitute application should be executed. When a substitute application should be executed, the electronic device determines whether or not a substitute application is held. When a substitute application is held, the substitute application is executed. Therefore, the electronic device of the first embodiment, even when existing on a network only composed of devices without a center server, can execute a substitute application if an application falls into an unexecutable state in another electronic device. Therefore, a service is continued to be executed even on a network only composed of devices without a center server.

Here, combinations of the first to fourth basic processes will be described.

The first basic process and the second basic process can be combined. For example, the electronic device 1 previously obtains application executed state information as in the second basicprocess, and when it has been determined that a startup request has not been detected in step S306 of FIG. 11, the determination of step S408 of FIG. 12 is executed. If the application executed state information is held, the operation of step S307 which determines whether or not an identical function application is held, is performed. Note that the combination of the first basic process and the second basic process is not limited to this.

The first basic process and the third basic process can be combined. For example, the electronic device 1 may previously create a relevance table and determine that an identical function application is not held in step S307 as in the third embodiment, and thereafter, execute step S507 of FIG. 13, and if a relevant function application is held, execute the relevant application. Note that the combination of the first basic process and the third basic process is not limited to this.

The first basic process and the fourth basic process can be combined. For example, the electronic device 1, when determining that application executed state information is not held in step S608 of FIG. 14, may execute steps S306 and S307 of FIG. 11, and when detecting a startup request, may start up an identical function application without application executed state information. Note that the combination of the first basic process and the fourth basic process is not limited to this.

The first to fourth basic processes can be combined in other manners as much as possible. Three or more of the basic processes may be combined. An electronic device may simply execute the first to fourth basic processes in sequence. The present invention is not limited to the above-described combinations.

Note that, in the first embodiment, the substitute application holding determining section 15 determines whether or not a substitute application which can substitute for a detected unexecutable application is held in the electronic device 1 with reference to an identity table and/or a relevance table. However, so long as it can be determined whether or not a substitute application is held in the electronic device 1, the substitute application holding determining section 15 may not reference an identity table and/or a relevance table. Specifically, the substitute application holding determining section 15 may determines whether or not a substitute application is held every time the application execution determining section 14 determines that a substitute application should be executed. Specifically, steps S302 and S304 of FIG. 11, steps S402 and S404 of FIG. 12, steps S502 and S504 of FIG. 13, and steps S602 and S604 of FIG. 14, are not essential in the present invention.

### (Second embodiment)

In the first embodiment, the electronic device 1 is assumed to be the only electronic device that executes the application continuation program. In a second embodiment, it is assumed that there are one or more electronic devices which execute the application continuation program in addition to the electronic device 1. Here, for the sake of simplicity, it is assumed that the electronic device 3 executes the application continuation program. Even if other electronic devices as well as the electronic device 3 execute the application continuation program, each of the electronic devices is similarly operated.

In the case of the first embodiment, the electronic devices 1 and 3 separately execute substitute applications.

However, in the case where a group of the electronic devices connected to the network 6 is considered as a single system, even when not all electronic devices perform substitute applications, the system may be sufficiently operated. In other words, it may be sufficient that only one device executes a substitute application. Alternatively, some conditions may be desired to be set for an electronic device which executes a substitute application. For example, an identical function application is desired to be started up in an electronic device having as high a specification as possible or in a device which can be carried with as high a priority as possible.

In the second embodiment, a mechanism which starts up a substitute application using only limited electronic device(s), will be described.

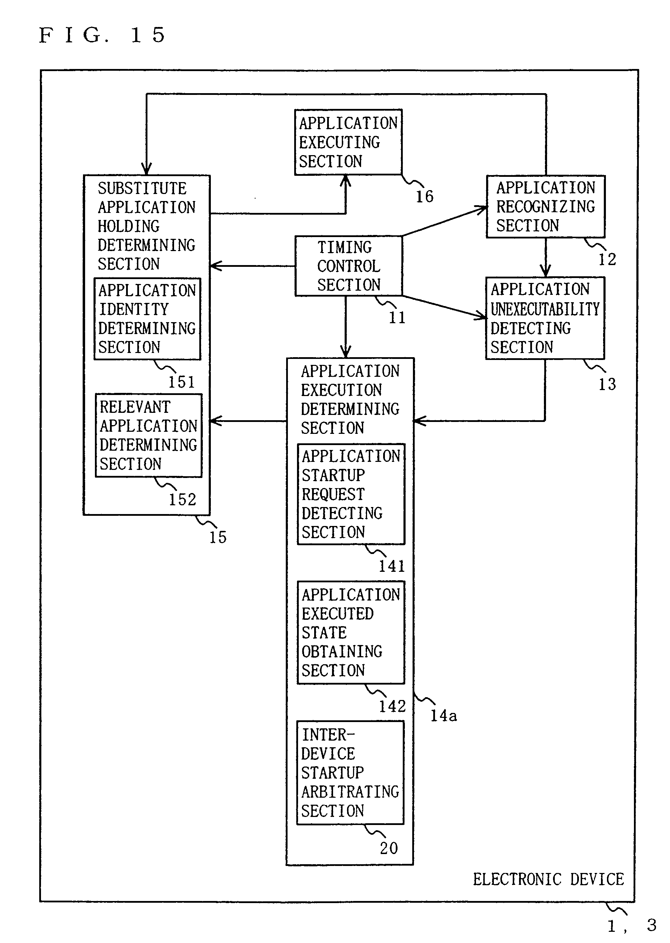

FIG. 15 is a block diagram illustrating a functional configuration of the electronic devices land 3 when an application continuation program according to the second embodiment is executed. In FIG. 15, blocks having functions similar to those of the first embodiment of FIG. 4 are indicated with the same reference numerals and will not be described. As illustrated in FIG. 15, the electronic devices 1 and 3 of the second embodiment further comprise an inter-device startup arbitrating section 20 in an application execution determining section 14a.

Hereinafter, the inter-device startup arbitrating section 20 in the electronic device 1 (the inter-device startup arbitrating section 20 in the electronic device 3) communicates with the inter-device startup arbitrating section 20 in the electronic device 3 (the inter-device startup arbitrating section 20 in the electronic device 1) to determine whether or not a substitute application is to be started up.

The inter-device startup arbitrating section 20 performs the following roughly two processes X and Y.

(Process X) A process for obtaining startup arbitration information held by the other electronic device, and based on the startup arbitration information, and determining whether or not a substitute application is to be started up in the electronic device 1 or 3.
(Process Y) A process for responding whether or not a substitute application is held, in response to a request from the inter-devicestartup arbitratingsection20ofthe other electronic device, and providing startup arbitration information held by the electronic device 1 or 3 to the inter-device startup arbitrating section 20 of the other electronic device.

The startup arbitration information communicated between the electronic devices will be described below.

Initially, the process X will be described. When the electronic device of the present invention holds an identical function application or a relevant function application, the process X is performed so as to determine whether or not the held application is to be executed.

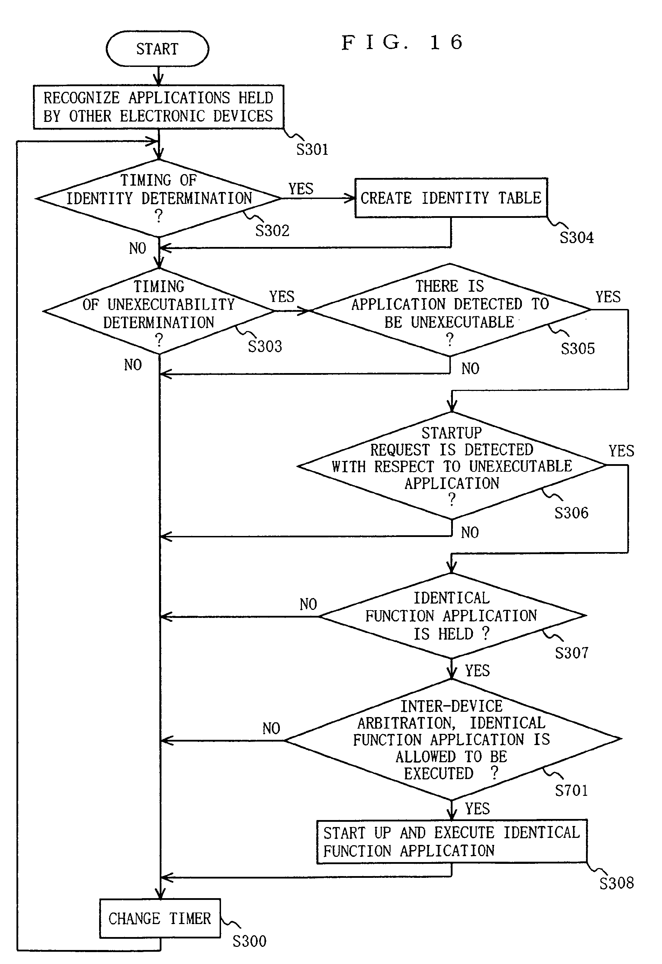

FIG. 16 is a flowchart illustrating an operation of the electronic device 1 when the process X is added to the first basic process. In FIG. 16, steps having operations similar to those of FIG. 11 are indicated with the same reference numerals and will not be described. As illustrated in FIG. 16, the electronic device 1 executes the process X in step S701 after step S307 in which it is determined that an identical function application is held. In step S701, the inter-device startup arbitrating section 20 obtains startup arbitration information held by the other electronic device, and based on the startup arbitration information, determines whether or not the identical function application determined to be held should be executed. When it is determined that the identical function application should be executed, the electronic device 1 goes to the operation of step S308. On the other hand, when it is determined that the identical function application should not be executed, the electronic device 1 goes to the operation of step S300.

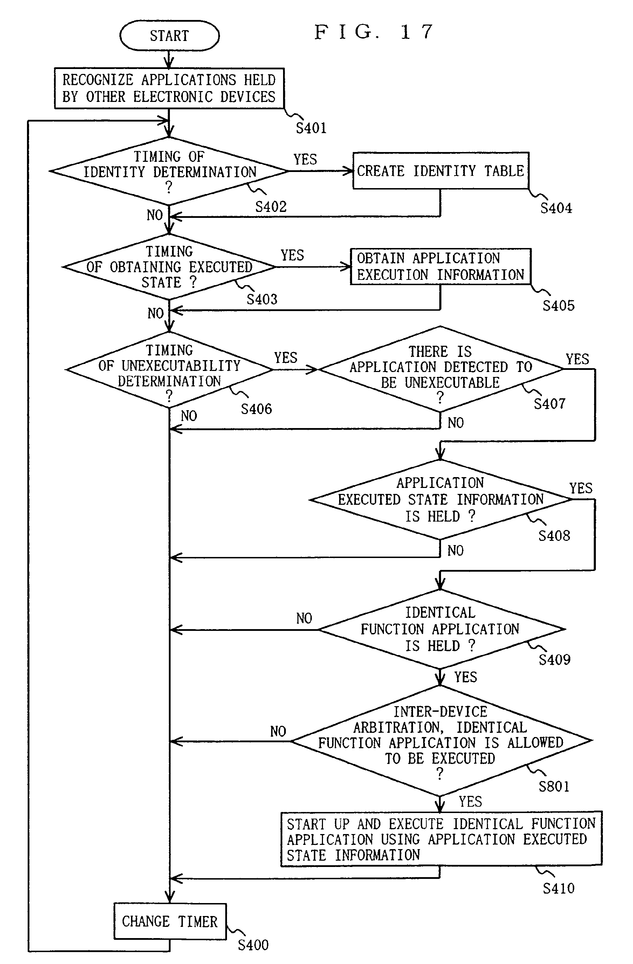

FIG. 17 is a flowchart illustrating an operation of the electronic device 1 when the process X is added to the second basic process. In FIG. 17, steps having operations similar to those of FIG. 12 are indicated with the same reference numerals and will not be described. As illustrated in FIG. 17, the electronic device 1 executes the process X in step S801 after step S409 in which it is determined that an identical function application is held. In step S801, the inter-device startup arbitrating section 20 obtains startup arbitration information held by the other electronic device,and based on the startup arbitration information, determines whether or not the identical function application determined to be held should be executed. When it is determined that the identical function application should be executed, the electronic device 1 goes to the operation of step S410. On the other hand, when it is determined that the identical function application should not be executed, the electronic device 1 goes to the operation of step S400.

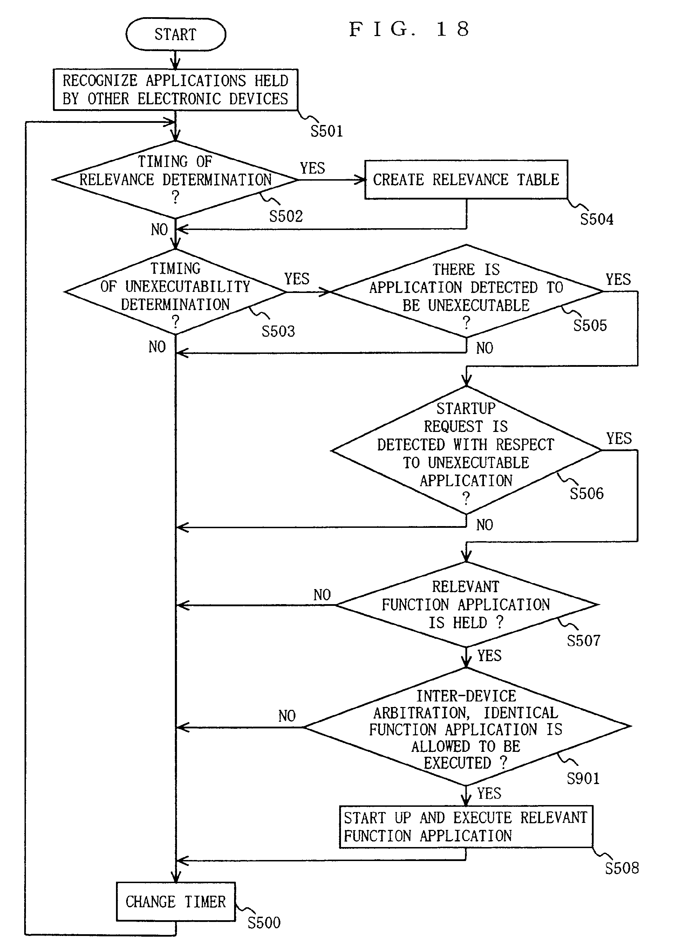

FIG. 18 is a flowchart illustrating an operation of the electronic device 1 when the process X is added to the third basic process. In FIG. 18, steps having operations similar to those of FIG. 13 are indicated with the same reference numerals and will not be described. As illustrated in FIG. 18, the electronic device 1 executes the process X in step S901 after step S507 in which it is determined that a relevant function application is held. In step S901, the inter-device startup arbitrating section 20 obtains startup arbitration information held by the other electronic device,and based on the startup arbitration information, determines whether or not the identical function application determined to be held should be executed. When it is determined that the identical function application should be executed, the electronic device 1 goes to the operation of step S508. On the other hand, when it is determined that the identical function application should not be executed, the electronic device 1 goes to the operation of step S500.

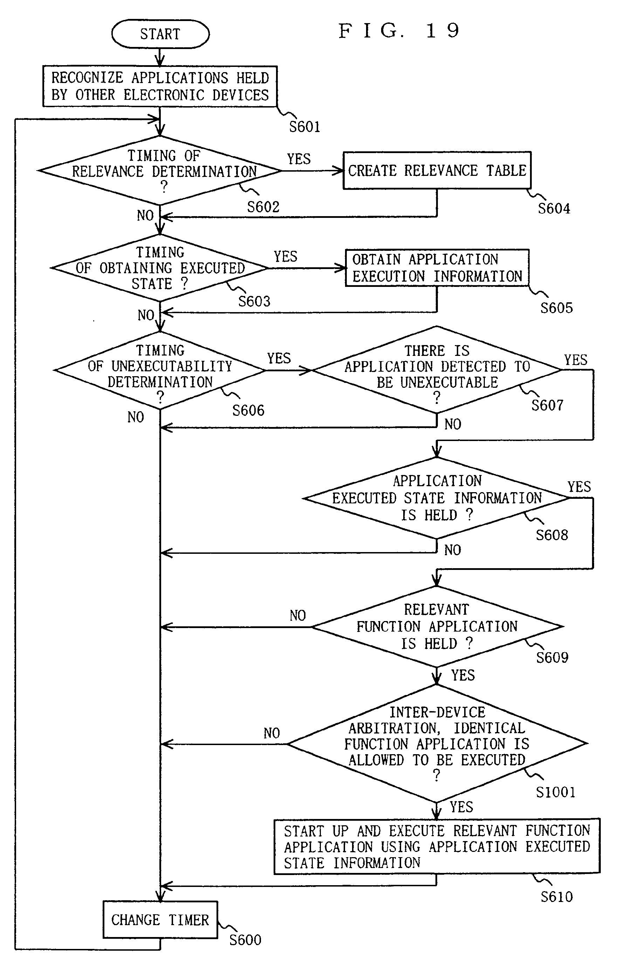

FIG. 19 is a flowchart illustrating an operation of the electronic device 1 when the process X is added to the fourth basic process. In FIG. 19, steps having operations similar to those of FIG. 14 are indicated with the same reference numerals and will not be described. As illustrated in FIG. 19, the electronic device 1 executes the process X in step S1001 after step S609 in which it is determined that an identical function application is held. In step S1001, the inter-device startup arbitrating section 20 obtains startup arbitration information held by the other electronic device,and based on the startup arbitration information, determines whether or not the identical function application determined to be held should be executed. When it is determined that the identical function application should be executed, the electronic device 1 goes to the operation of step S610. On the other hand, when it is determined that the identical function application should not be executed, the electronic device 1 goes to the operation of step S600.

Next, a process of determining whether or not a substitute application which is to be executed by the inter-device startup arbitrating section 20 can be started up (steps S701, S801, S901 and S1001) will be described in detail.

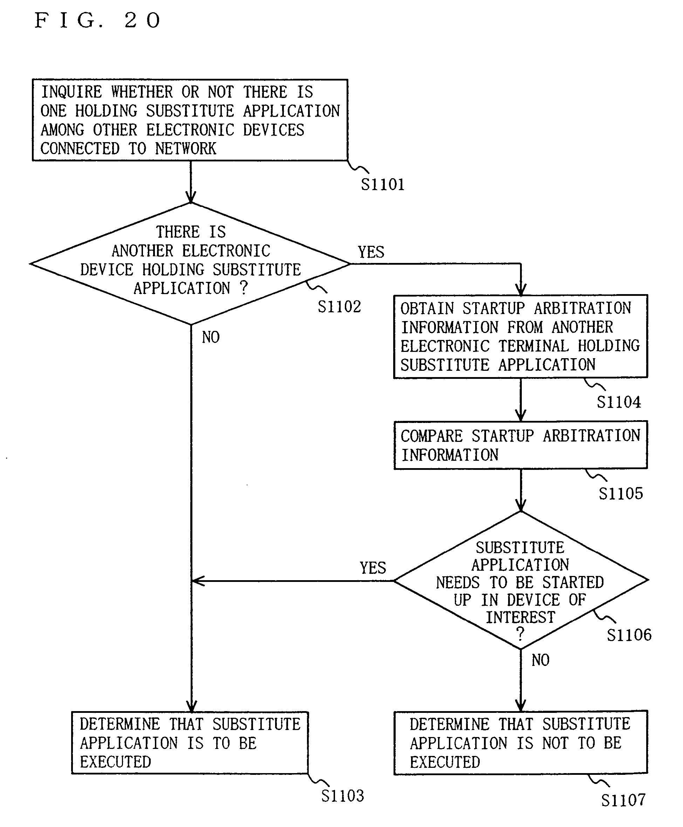

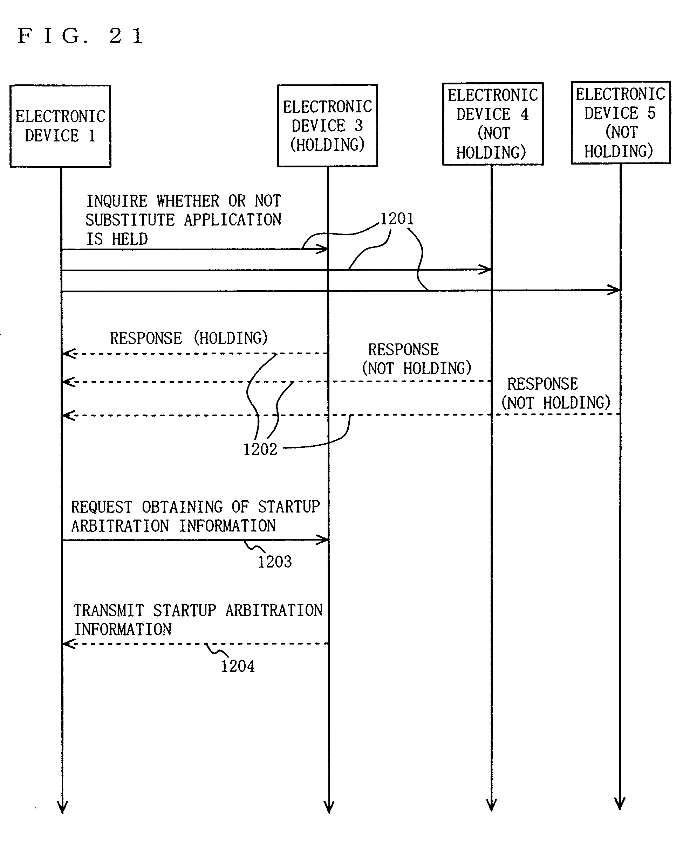

FIG. 20 is a flowchart illustrating a detailed operation of the electronic device 1 in the substitute application startup deciding process (steps S701, S801, S901, S1001). FIG. 21 is a sequence diagram illustrating communication between electronic devices on a network in the substitute application startup deciding process (step S701, S801, S901 and S1001). In FIG. 21, vertical lines indicate time courses of the respective electronic devices. Horizontal lines indicate communication between the electronic devices. In FIG. 21, for the sake of simplicity, it is assumed that the electronic device 3 holds a substitute application, and the electronic devices 4 and 5 do not hold a substitute application.

Initially, the inter-device startup arbitrating section 20 of the electronic device 1 inquires the other electronic devices 3, 4 and 5 connected to the network 6 whether or not a substitute application is held (steps S1101, communication 1201).

In response to this, the other electronic devices execute the process Y to respond whether or not a substitute application is held (communication 1202). Specifically, the inter-device startup arbitrating sections 20 of the other electronic devices determine whether or not a substitute application is held, with reference to an identity table or a relevance table, and returns the determination result. In FIG. 21, the electronic device 3 responds that a substitute application is held, and the electronic devices 4 and 5 respond that a substitute application is not held.

Based on the responses, the inter-device startup arbitrating section 20 of the electronic device 1 which has received the responses of the other electronic devices, determines whether or not there is another electronic device which holds a substitute application (step S1102).

When there is not another electronic device which holds a substitute application, the inter-device startup arbitrating section 20 of the electronic device 1 determines that a substitute application can be started up (step S1103). On the other hand, when there is another electronic device which holds a substitute application, the inter-device startup arbitrating section 20 of the electronic device 1 goes to an operation of step S1104.

In step S1104, the inter-device startup arbitrating section 20 of the electronic device 1 obtains startup arbitration information from an electronic device which holds a substitute application. In this case, the inter-device startup arbitrating section 20 of the electronic device 1 transmits a request for obtaining startup arbitration information to the electronic device 3 (communication 1203). In response to this, the inter-device startup arbitrating section 20 of the electronic device 3 transmits the held startup arbitration information to the electronic device 1 (communication 1204). Note that these communications may not be performed with respect to an electronic device which does not hold a substitute application.

Next, the inter-device startup arbitrating section 20 of the electronic device 1 compares the startup arbitration information held by the electronic device 1 with the startup arbitration information transmitted from the electronic device 3 (step S1105).

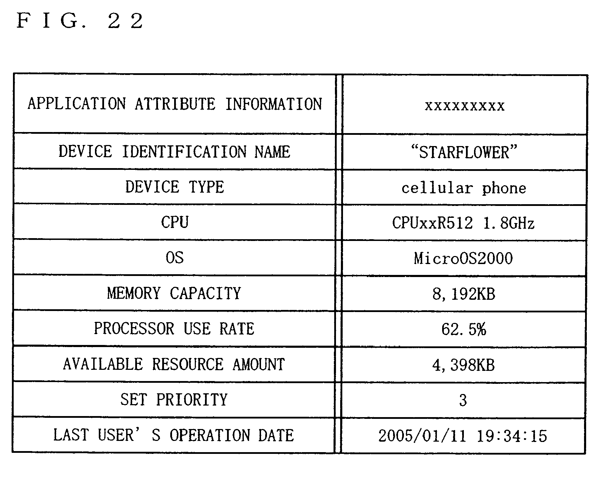

Here, the startup arbitration information will be described. The startup arbitration information refers to information which is used to determine the degree of necessity of execution of a service by an application. FIG. 22 is a diagram illustrating an exemplary table form of the startup arbitration information. In each entry of the table, information for determining the degree of necessity of execution of a substitute application is registered. Each entry of the figure will be briefly described.

In APPLICATION ATTRIBUTE INFORMATION, application attribute information of a substitute application held by an electronic device is recorded. The application attribute information is similar to the information described above with reference to FIG. 3 and will not be described in detail.

In DEVICE IDENTIFICATION NAME, identification information for uniquely specifying the electronic device is recorded. This information may be in the form of a character string name or numerals, or in other forms.

In DEVICE TYPE, information for specifying a type of the electronic device, such as a mobile telephone, a PDA, a video recorder, a PC, or the like, is recorded.

In CPU, information about a processor included in the electronic device, such as a specification, a speed or the like of a CPU included in the electronic device, is recorded.

In OS, information about an OS or middleware included in the electronic device, such as a specification, a version or the like of an OS included in the electronic device, is recorded.

In MEMORY CAPACITY, information about a resource, such as a memory or the like, included in the electronic device, is recorded.

In PROCESSOR USE RATE, information about an occupation rate of a processor of the electronic device, is recorded.

In AVAILABLE RESOURCE AMOUNT, information about an unused resource amount of a resource, such as a memory or the like, included in the electronic device, is recorded.

In SET PRIORITY, information about priority of service performance of the electronic device is recorded. The priority may be a numeric value invariably defined with respect to the device or a numeric value which can be set by the user for each device.

In LAST USER'S OPERATION DATE, information about last time at which a user's operation is performed with respect to the electronic device, is recorded.

FIG. 22 illustrates one implementation example of startup arbitration information. A portion of the entries of FIG. 22 may be removed or entries indicating information about other attributes may be included in the table.

After step S1105, the inter-device startup arbitrating section 20 of the electronic device 1 determines whether or not it is necessary to start up and execute a substitute application in the electronic device 1, based on the result of comparison between the startup arbitration information held by the electronic device 1 and the startup arbitration information held by the other electronic device obtained in step S1104 (step S1106).

The determination of step S1106 is performed using the following determination methods.

(First determination method) Using application attribute information included in the startup arbitration information, the inter-device startup arbitrating section 20 of the electronic device 1 determines that it is necessary to start up a substitute application when a substitute application whose required resource amount is smaller than that of the substitute application held by the electronic device 1 is held by the other electronic device, and when otherwise, determines that it is not necessary to start up it.

(Second determination method) The inter-device startup arbitrating section 20 of the electronic device 1 uses information about a device identification name, a device type, a CPU, an OS, a memory capacity, a processor use rate, an available resource amount, and/or a set priority included in the startup arbitration information, to determine that it is necessary to start up a substitute application if the information meets a condition defined in the electronic device 1, and that it is not necessary to start up a substitute application if the condition is not met. Examples of the condition are as follows.
(Exemplary condition 2-1) When there is no other electronic device having a set priority higher than that of the electronic device 1, the electronic device 1 is assumed to require startup of a substitute application. When there is another electronic device having a set priority higher than that of the electronic device 1, the electronic device 1 is assumed not to require startup of a substitute application.
(Exemplary condition 2-2) When there is no other electronic device having an available resource amount larger than that of the electronic device 1, the electronic device 1 is assumed to require startup of a substitute application. When there is another electronic device having an available resource amount larger than that of the electronic device 1, the electronic device 1 is assumed not to require startup of a substitute application.
(Exemplary condition 2-3) When there is no other electronic device that has the same type as that of the electronic device 1 and has a CPU having a specification higher than that of the electronic device 1, the electronic device 1 is assumed to require startup of a substitute application. When there is an electronic device that has the same type as that of the electronic device 1 and has a CPU having a specification higher than that of the electronic device 1, the electronic device 1 is assumed not to require startup of a substitute application.

(Third determination method) Based on information about the last user's operation date, the inter-device startup arbitrating section 20 of the electronic device 1 determines whether or not there is an electronic device to which a user's operation is added at a time later than that of the electronic device 1. If there is not such an electronic device, the electronic device 1 is assumed to require startup of a substitute application. If there is such an electronic device, the electronic device 1 is assumed not to require startup of a substitute application.

The determination process may be performed using other startup arbitration information and other determination methods.

In step S1106, when the necessity of startup of a substitute application has been confirmed, the inter-device startup arbitrating section 20 of the electronic device 1 goes to the operation of step S1103, and determines that a substitute application is to be started up. On the other hand, when the necessity of startup of a substitute application has not been confirmed, the inter-device startup arbitrating section 20 of the electronic device 1 determines that a substitute application is not to be started up (step S1107).

Thus, according to the second embodiment, when a plurality of electronic devices on a network execute the application continuation program, an inter-device startup arbitrating section determines whether or not a substitute application should be executed, so that only limited electronic device (s) execute the substitute application in the whole system. Therefore, the resource of the whole system can be effectively utilized.

Note that the first to fourth basic processes may be combined in the second embodiment.

While the invention has been described in detail, the foregoing description is in all aspects illustrative and not restrictive. It is understood that numerous other modifications and variations can be devised without departing from the scope of the invention.

### INDUSTRIAL APPLICABILITY

By utilizing the present invention having the above-described configuration, even in network devices not in the assumption of a centralized control scheme like a center server, an associated operation between the devices for securing high stability of a service can be achieved. For example, the same service can be automatically executed in another device, the rest of an interrupted service can be taken over and executed by another device, and the like. Therefore, the electronic device of the present invention is useful in the field of communications and the like.

## Claims

1. An electronic device connected via a network to at least another electronic device which can execute an application, comprising:
an application recognizing section for recognizing an application held by the other electronic device;
an application unexecutability detecting section for detecting whether or not the application recognized by the application recognizing section is unexecutable in the other electronic device;
an application execution determining section for determining whether or not a substitute application which can substitute for an application which the application unexecutability detecting section has determined that is unexecutable, is to be executed;
a substitute application holding determining section for determining whether or not the substitute application which can substitute for the application determined to be unexecutable is held in the electronic device; and
an application executing section for executing the substitute application.

2. The electronic device according to claim 1, wherein
the application execution determining section includes an application startup request detecting section for detecting a startup request with respect to the application which the application unexecutability detecting section has detected that is unexecutable, and
the application execution determining section, when a startup request is detected with respect to the application which the application unexecutability detecting section has determined that is unexecutable, determines that the substitute application is to be executed.

3. The electronic device according to claim 1, wherein
the substitute application holding determining section includes an application identity determining section for determining whether or not an identical function application having a function identical to the application held by the other electronic device recognized by the application recognizing section is held by the electronic device, and creating an identity table in which the application held by the other electronic device is associated with the identical function application held in the electronic device,
the identical function application is a substitute application, and
the substitute application holding determining section determines whether or not the substitute application is held in the electronic device, based on the identity table created by the application identity determining section.

4. The electronic device according to claim 1, wherein
the substitute application holding determining section includes a relevant application determining section for creating a relevance table in which a relevant function application having a function relevant to the application held by the other electronic device recognized by the application recognizing section, is associated with the application held by the other electronic device,
the relevant function application is a substitute application, and
the substitute application holding determining section determines whether or not the substitute application is held in the electronic device, based on the relevance table created by the relevant application determining section.

5. The electronic device according to claim 1, wherein
the application execution determining section includes an application executed state obtaining section for obtaining an executed state of an application executed in the other electronic device as application executed state information,
the application execution determining section determines that the substitute application is to be executed, when the application executed state information about the application which the application startup request detecting section has determined that is unexecutable, is held by the application executed state obtaining section, and
the application executing section executes the substitute application based on the application executed state information so as to continue the application determined to be unexecutable.

6. The electronic device according to claim 1, wherein the application execution determining section includes an inter-device startup arbitrating section which inquires the other electronic device connected to the network whether or not the substitute application is held, and communicates with another electronic device which holds the substitute application, to determine whether or not the substitute application is to be executed in the electronic device.

7. A method for processing an electronic device connected via a network to at least another electronic device which can execute an application, comprising the steps of:
recognizing an application held by the other electronic device;
detecting whether or not the application recognized by the application recognizing section is unexecutable in the other electronic device;
determining whether or not a substitute application which can substitute for an application determined to be unexecutable, is to be executed;
determining whether or not the substitute application which can substitute for the application determined to be unexecutable is held in the electronic device; and
executing the substitute application.

8. A program executed in an electronic device connected via a network to at least another electronic device which can execute an application, comprising the steps of:
recognizing an application held by the other electronic device;
detecting whether or not the application recognized by the application recognizing section is unexecutable in the other electronic device;
determining whether or not a substitute application which can substitute for an application determined to be unexecutable, is to be executed;
determining whether or not the substitute application which can substitute for the application determined to be unexecutable is held in the electronic device; and
executing the substitute application.
